# EUROPEAN PATENT APPLICATION

(11) **EP 4 799 908 A1**
(43) Date of publication of application: **02.09.2026**
(21) Application number: 24880959.2
(22) Date of filing: 24.04.2024
(51) Int. Cl.: B62D 21/02

(54) **SUBFRAME OF VEHICLE, VEHICLE BODY ASSEMBLY OF VEHICLE, AND VEHICLE**

(30) Priority: 23.10.2023 CN 202311379478
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: SI, Haoran, Hangzhou, Zhejiang 310051 (CN); YANG, Yanchao, Hangzhou, Zhejiang 310051 (CN); XIE, Zhiqiang, Hangzhou, Zhejiang 310051 (CN); CAO, Shijin, Hangzhou, Zhejiang 310051 (CN); SI, Kaizhong, Hangzhou, Zhejiang 310051 (CN)
(74) Representative: Range, Christopher William
(86) International application number: PCT/CN2024/089675
(87) International publication number: WO 2025/086580

(57) **Abstract**

A subframe (100) of a vehicle, a vehicle body assembly of a vehicle, and a vehicle. The subframe (100) comprises: a first cross beam (10) and a second cross beam (20) arranged at an interval in a first direction of the subframe (100), the first cross beam (10) being located on the front side of the second cross beam (20); a plurality of subframe longitudinal beams (30) arranged in a second direction of the subframe (100), the plurality of subframe longitudinal beams (30) being all connected to the first cross beam (10) and the second cross beam (20); and a third cross beam (60) located between the first cross beam (10) and the second cross beam (20) in the first direction, the third cross beam (60) being connected to all of the plurality of subframe longitudinal beams (30), the third cross beam (60) being configured as an arc-shaped structure, and in the first direction, the third cross beam (60) protruding towards the second cross beam (20).

## Description

### CROSS-REFERENCE TO RELATED APPLICATION

This application is based on and claims priority to Chinese patent application No. 202311379478.5, filed on October 23, 2023, the entire contents of which are incorporated herein by reference.

### FIELD

The present disclosure relates to the field of vehicle technologies, and more particularly, to a subframe of a vehicle, a vehicle body assembly having the subframe, and a vehicle having the vehicle body assembly.

### BACKGROUND

In the related art, a front subframe of an existing vehicle is deficient in structural strength and rigidity, and when a vehicle is involved in a collision, the front subframe deforms severely.

### SUMMARY

The present disclosure aims to solve at least one of the technical problems in the related art.

To this end, an objective of the present disclosure is to provide a subframe, which can enhance structural strength and rigidity of the subframe and reduce a deformation amount of the subframe when a vehicle is involved in a collision.

The present disclosure further provides a vehicle body assembly having the above-described subframe.

The present disclosure further provides a vehicle having the above-described vehicle body assembly.

The subframe of the vehicle according to the present disclosure includes: a first cross member and a second cross member that are spaced apart from each other in a first direction of the subframe, the first cross member being located at a front side of the second cross member; a plurality of subframe longitudinal members arranged in a second direction of the subframe, each of the plurality of subframe longitudinal members being connected to the first cross member and the second cross member; and a third cross member located between the first cross member and the second cross member in the first direction, the third cross member being connected to each of the plurality of subframe longitudinal members, the third cross member being constructed as an arc-shaped structure, and the third cross member protruding towards the second cross member in the first direction.

By connecting each of the plurality of subframe longitudinal members to the first cross member and the second cross member and connecting the third cross member to each of the plurality of subframe longitudinal members, the subframe of the vehicle according to the present disclosure can be formed into a frame-type structure, thus enhancing fatigue strength and rigidity of the subframe. In addition, the third cross member is constructed as the arc-shaped structure and protrudes towards the second cross member, which can further enhance the structural strength and the rigidity of the subframe and reduce the deformation amount of the subframe when the vehicle is involved in the collision.

The vehicle body assembly according to the embodiments of the present disclosure includes a vehicle body. The vehicle body has a vehicle body longitudinal member. The vehicle body assembly further includes the above-described subframe fixedly disposed at the vehicle body longitudinal member and located below the vehicle body longitudinal member.

The vehicle according to the embodiments of the present disclosure includes the above-described vehicle body assembly.

Additional aspects and advantages of the present disclosure will be provided in part in the following description, or will in part become apparent from the following description, or be learned from practicing of the present disclosure.

### BRIEF DESCRIPTION OF THE DRAWINGS

FIG. 1 is a schematic perspective structural view of a subframe according to an embodiment of the present disclosure.
FIG. 2 is a front view of a subframe according to an embodiment of the present disclosure.
FIG. 3 is a side view of a subframe according to an embodiment of the present disclosure.
FIG. 4 is a schematic assembly view of a subframe and a suspension according to an embodiment of the present disclosure.
FIG. 5 is an enlarged view of part A in FIG. 4.
FIG. 6 is a schematic assembly view of a subframe and a vehicle body longitudinal member according to an embodiment of the present disclosure.

Reference numerals in the specification are as follows:
subframe 100;
first cross member 10; longitudinal member mounting hole 11; cross member front side wall 12; cross member rear side wall 13;
second cross member 20;
subframe longitudinal member 30; collapsible energy-absorption section 31; collapsible recess structure 310; first surface 311; second surface 312; control arm front mounting frame 32; control arm rear mounting frame 33; first mounting plate 331; second mounting plate 332; reinforcing support 34; first reinforcing support plate 341; second reinforcing support plate 342; first mounting sleeve 343; vehicle body mounting hole 344; second mounting sleeve 35;
vehicle body 40; vehicle body longitudinal member 41; energy-absorption structure 42;
connection base 50; mounting end wall 51; suspension mounting hole 52; mounting ring 53; mounting portion 54; front end wall 55; avoidance groove structure 56; connection support 57; suspension mounting plate 58;
third cross member 60; first mounting portion 611; second mounting portion 612; first mounting hole 613; fitting structure 614; connection portion 615; bent portion 616; first cross member body 62; second cross member body 63; third cross member body 64; first suspension mounting frame 65; second suspension mounting frame 66; third suspension mounting frame 67;
support frame 70; steering gear mounting hole 71; first support frame plate 72; second support frame plate 73; first side connection end 74; second side connection end 75; third side connection end 76;
stabilizer bar mounting support 80; stabilizer bar mounting end wall 81; connection side wall 82; connection end 90;
powertrain 200; anti-collision cross member 1; energy-absorption member 2; mounting base 3; collapsible recess 203; anti-collision assembly 300.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

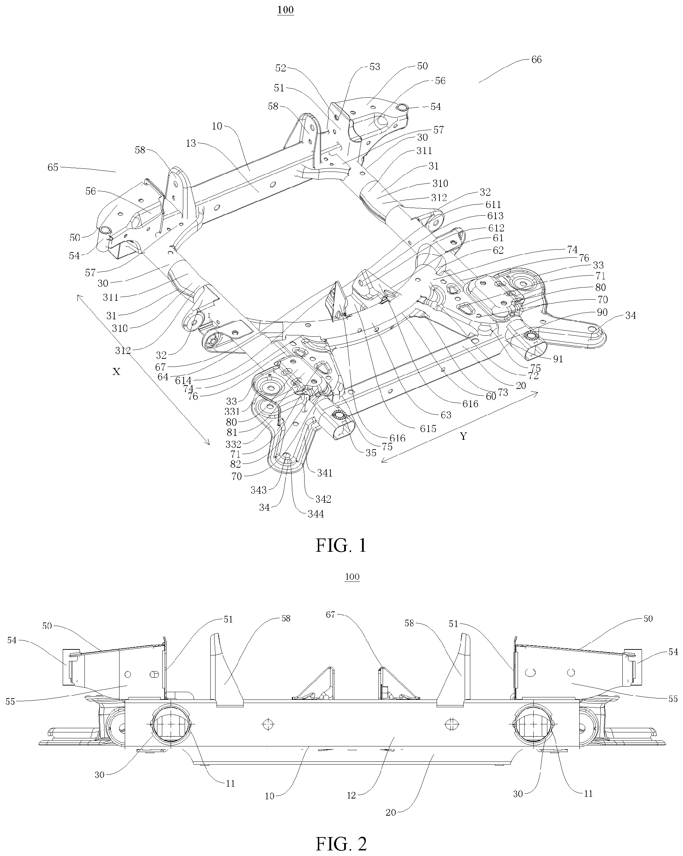

A subframe 100 of a vehicle, a vehicle body assembly, and the vehicle according to the embodiments of the present disclosure are described below with reference to FIG. 1 to FIG. 6. The subframe 100 may be a front subframe of the vehicle, and the present disclosure takes the subframe 100 serving as the front subframe as an example for illustration.

As illustrated in FIG. 1 to FIG. 6, the subframe 100 according to the embodiments of the present disclosure includes: a first cross member 10 and a second cross member 20 that are spaced apart from each other in a first direction of the subframe 100, the first cross member 10 being located at a front side of the second cross member 20; a plurality of subframe longitudinal members 30 arranged in a second direction of the subframe 100, each of the plurality of subframe longitudinal members 30 being connected to the first cross member 10 and the second cross member 20; and a third cross member 60 located between the first cross member 10 and the second cross member 20 in the first direction, the third cross member 60 being connected to the plurality of subframe longitudinal members 30, the third cross member 60 being constructed as an arc-shaped structure, and in the first direction, the third cross member 60 protruding towards the second cross member 20.

The subframe 100 may be formed by welding section bars with a circular cross-section, a waist-shaped cross-section, and a rectangular cross-section, without a need for molds, which greatly saves mold costs and thus reduces manufacturing costs of the subframe 100. The subframe 100 may include the first cross member 10 and the second cross member 20 that are spaced apart from each other in the first direction of the subframe 100. The first direction of the subframe 100 refers to an X direction in FIG. 1, and the first cross member 10 and the second cross member 20 are spaced apart from each other in the first direction. The subframe 100 may have the plurality of subframe longitudinal members 30. For example, the subframe 100 may have two, three, four or more subframe longitudinal members 30, but the present disclosure is not limited thereto. Other number of subframe longitudinal members 30 may also be possible in the subframe 100, as long as the subframe 100 has the plurality of subframe longitudinal members 30. The present disclosure takes a scenario where the subframe 100 has two subframe longitudinal members 30 as an example for illustration.

As illustrated in FIG. 1, the X direction may be the first direction, a Y direction may be the second direction, and the first direction is perpendicular to the second direction. The plurality of subframe longitudinal members 30 each extend in the first direction and are arranged in the second direction of the subframe 100. Two adjacent subframe longitudinal members of the plurality of subframe longitudinal members 30 are spaced apart from each other in the second direction. Each of the plurality of subframe longitudinal members 30 is connected to the first cross member 10 and the second cross member 20. It should be noted that the first direction refers to a length direction of the vehicle, and the second direction refers to a width direction of the vehicle.

In an exemplary embodiment of the present disclosure, the subframe longitudinal member 30 is connected to the first cross member 10 at an end of the subframe longitudinal member 30, and is connected to the second cross member 20 at the other end of the subframe longitudinal member 30. For example, the subframe longitudinal member 30 may be welded to the first cross member 10 and the second cross member 20, or the subframe longitudinal member 30 may be bolted to the first cross member 10 and the second cross member 20, but the present disclosure is not limited thereto. The subframe longitudinal member 30 may be connected to the first cross member 10 and the second cross member 20 in other manners, as long as each of the plurality of subframe longitudinal members 30 is connected between the first cross member 10 and the second cross member 20. Thus, each of the plurality of subframe longitudinal members 30 is connected between the first cross member 10 and the second cross member 20, and the third cross member 60 is connected to the plurality of subframe longitudinal members 30. In this way, a frame structure can be formed among the third cross member 60, the subframe longitudinal member 30, the first cross member 10, and the second cross member 20, which can further improve structural rigidity and strength of the subframe 100, further enhancing safety performance of the vehicle.

As illustrated in FIG. 1 and FIG. 2, the third cross member 60 is constructed as the arc-shaped structure. In the first direction, the third cross member 60 protrudes towards the second cross member 20. The third cross member 60 may be constructed as a "C" shape or a substantially "C" shape. Such an arrangement further enhances the structural strength and the rigidity of the subframe 100. When the vehicle is involved in a collision, deformation amount of the subframe 100 is reduced, thus further enhancing the safety performance of the vehicle. Furthermore, a cross-section of the third cross member 60 may have an oblong shape, in such a manner that rigidity of the third cross member 60 in a height direction of the vehicle can be enhanced without increasing a weight of the third cross member 60.

Thus, by connecting each of the plurality of subframe longitudinal members 30 to the first cross member 10 and the second cross member 20 and connecting the third cross member 60 to the plurality of subframe longitudinal members 30, the subframe 100 can be formed into a frame-type structure, thus enhancing fatigue strength and rigidity of the subframe 100. In addition, the third cross member 60 is constructed as the arc-shaped structure and protrudes towards the second cross member 20, which can further enhance the structural strength and the rigidity of the subframe 100, and reduce the deformation amount of the subframe 100 when the vehicle is involved in the collision.

According to some embodiments of the present disclosure, in a third direction of the subframe 100, a level of a lower surface of the second cross member 20 is lower than a level of a lower surface of a battery pack of the vehicle. The first direction, the second direction, and the third direction are perpendicular to each other.

In the third direction of the subframe 100, the level of the lower surface of the second cross member 20 is lower than the level of the lower surface of the battery pack of the vehicle. When the vehicle travels over a road surface with a raised obstacle, the obstacle first impacts the second cross member 20. The second cross member 20 deforms to absorb impact energy, and an impact force is partially or fully absorbed by the second cross member 20. Structural strength of the second cross member 20 is set based on parameters such as a height of the battery pack. This setting enables the second cross member 20 to effectively absorb the impact force and reduce a risk of the obstacle passing over the second cross member 20 and impacting the battery pack, providing effective protection for the battery pack, and further reducing a risk of a fire accident caused by the obstacle impacting the battery pack.

In an exemplary embodiment of the present disclosure, the first cross member 10 and the second cross member 20 are spaced apart from each other in the X direction of the subframe 100, the plurality of subframe longitudinal members 30 are arranged in the Y direction of the subframe 100, and each of the plurality of subframe longitudinal members 30 is connected between the first cross member 10 and the second cross member 20. Such an arrangement enhances the strength and the rigidity of the subframe 100, thus enhancing overall performance of the vehicle. When the vehicle is involved in the collision, the first cross member 10, the second cross member 20, the subframe longitudinal member 30, and a vehicle body longitudinal member 41 jointly form an energy-absorption and force-transmission system, which reduces an intrusion amount into a passenger compartment and protects the passenger safety. After the subframe 100 is mounted at the vehicle, the subframe 100 is located at a front side of the battery pack, and the level of the lower surface of the second cross member 20 is lower than the level of the lower surface of the battery pack of the vehicle. When the vehicle travels over the road surface with the raised obstacle, the obstacle first impacts the second cross member 2, and the impact force is partially or fully absorbed by the second cross member 20, which provides the effective protection for the battery pack, thus reducing the risk of the fire accident caused by the obstacle impacting the battery pack, and further improving driving safety and reliability of the vehicle.

The level of the lower surface of the second cross member 20 is lower than the level of the lower surface of the battery pack of the vehicle. In this way, when the vehicle travels over the road surface with the raised obstacle, the second cross member 20 first scrapes against the obstacle, and the second cross member 20 deforms and absorbs the impact energy, which can effectively protect the battery pack and reduce the risk of the fire accident caused by the obstacle impacting the battery pack, thus improving the driving safety and the reliability of the vehicle.

According to some embodiments of then present disclosure, a difference between the level of the lower surface of the second cross member 20 and the level of the lower surface of the battery pack is H, satisfying 10 mm≤H≤15 mm.

In the third direction, the difference between the level of the lower surface of the second cross member 20 and the level of the lower surface of the battery pack is H, satisfying 10 mm≤H≤15 mm. The difference H between the level of the lower surface of the second cross member 20 and the level of the lower surface of the battery pack may be set to 10 mm, 13 mm, or 15 mm, etc. The present disclosure takes a scenario where the difference H between the level of the lower surface of the second cross member 20 and the level of the lower surface of the battery pack is 10 mm as an example for illustration. The difference H between the level of the lower surface of the second cross member 20 and the level of the lower surface of the battery pack is 10 mm, which enables the second cross member 20 to effectively absorb the impact force, and reduces a risk that the obstacle passes over the second cross member 20 and impacts the battery pack due to an excessively small difference between the level of the lower surface of the second cross member 20 and the level of the lower surface of the battery pack, providing the effective protection for the battery pack, and reducing the risk of the fire accident caused by the obstacle impacting the battery pack. Also, poor traversability of the vehicle caused by an excessively low level of the second cross member 20 can be avoided, thus achieving an appropriate level difference between the level of the lower surface of the second cross member 20 and the level of the lower surface of the battery pack.

According to some embodiments of the present disclosure, as illustrated in FIG. 1, FIG. 4, and FIG. 6, the second cross member 20 is fixedly connected to a lower surface of each of the plurality of subframe longitudinal members 30.

The second cross member 20 is fixedly connected to a lower surface of each of the plurality of subframe longitudinal members 30. The second cross member 20 may be connected to the lower surface of each of the plurality of subframe longitudinal members 30 by welding. A welding method enables the second cross member 20 to be firmly and tightly connected to the subframe longitudinal member 30, improving overall structural stability of the subframe 100. The second cross member 20 is fixedly connected to the lower surface of each of the plurality of subframe longitudinal members 30. With a sunken design, the second cross member 20 can protect the battery pack in the event of a vehicle bottoming-out condition, reducing the risk of the fire accident caused by the obstacle impacting the battery pack.

According to some embodiments of the present disclosure, as illustrated in FIG. 1, FIG. 4, and FIG. 6, each of two ends of the second cross member 20 is formed as a connection end 90. The connection end 90 has a fitting notch 91 adapted to a corresponding subframe longitudinal member 30. The connection end 90 is fixedly connected to a lower surface of the corresponding subframe longitudinal member 30.

Each of the two ends of the second cross member 20 is formed as the connection end 90. The connection end 90 is fixedly connected to the subframe longitudinal member 30. The second cross member 20 is fixedly connected between two subframe longitudinal members 30 through the connection end 90. The connection end 90 is fixedly connected to the lower surface of the corresponding subframe longitudinal member 30. The connection end 90 may be fixedly connected to the lower surface of the corresponding subframe longitudinal member 30 by welding. The welding method enables the connection end 90 to be firmly and tightly connected to the subframe longitudinal member 30, improving connection reliability between the second cross member 20 and the subframe longitudinal member 30. The connection end 90 is fixedly connected to the lower surface of each of the plurality of subframe longitudinal members 30, which enables a sunken design of the second cross member 20. Thus, the second cross member 20 can protect the battery pack in the event of the vehicle bottoming-out condition, reducing the risk of the fire accident caused by the obstacle impacting the battery pack.

The connection end 90 may have the fitting notch 91 configured for fitting of the corresponding subframe longitudinal member 30 and adapted to the corresponding subframe longitudinal member 30. An outer circumferential wall of the subframe longitudinal member 30 may be constructed as a circular shape or a rectangular shape, and the fitting notch 91 may be constructed as an arc or a broken-line shape to match the outer circumferential wall of the subframe longitudinal member 30. The present disclosure takes a scenario where the outer circumferential wall of the subframe longitudinal member 30 is constructed as the circular shape and the fitting notch 91 is constructed as the arc as an example for illustration. By providing the fitting notch 91 that is adapted to the corresponding subframe longitudinal member 30, the connection end 90 can be tightly connected to the corresponding subframe longitudinal member 30, which improves connection reliability between the connection end 90 and the corresponding subframe longitudinal member 30, thus enhancing the structural strength of the subframe 100.

According to some embodiments of the present disclosure, as illustrated in FIG. 1, FIG. 4, and FIG. 6, a connection length between the connection end 90 and the corresponding subframe longitudinal member 30 is L3, satisfying 25 mm≤L3≤35 mm.

The connection end 90 is located at each of two ends of the second cross member 20. In the second direction, the connection length between the connection end 90 and the corresponding subframe longitudinal member 30 is L3, satisfying 25 mm≤L3≤35 mm. The connection length L3 between the connection end 90 and the corresponding subframe longitudinal member 30 may be set to 25 mm, 30 mm or 35 mm, etc. The present disclosure takes a scenario where the connection length L3 between the connection end 90 and the corresponding subframe longitudinal member 30 is 30 mm as an example for illustration. The connection length L3 between the connection end 90 and the corresponding subframe longitudinal member 30 is 30 mm, which can achieve effective connection between the connection end 90 and the corresponding subframe longitudinal member 30, enabling the connection between the connection end 90 and the corresponding subframe longitudinal member 30 to be reliable. On the one hand, an increase in cost caused by an excessively long connection length can be avoided; on the other hand, a risk of stress concentration caused by an excessively short connection length can be reduced, thus reducing a risk of fracture of the connection end 90 and improving the connection reliability.

According to some embodiments of the present disclosure, as illustrated in FIG. 1 to FIG. 6, in the third direction, a level of an upper surface of the second cross member 20 is flush with a level of a middle part of the subframe longitudinal member 30.

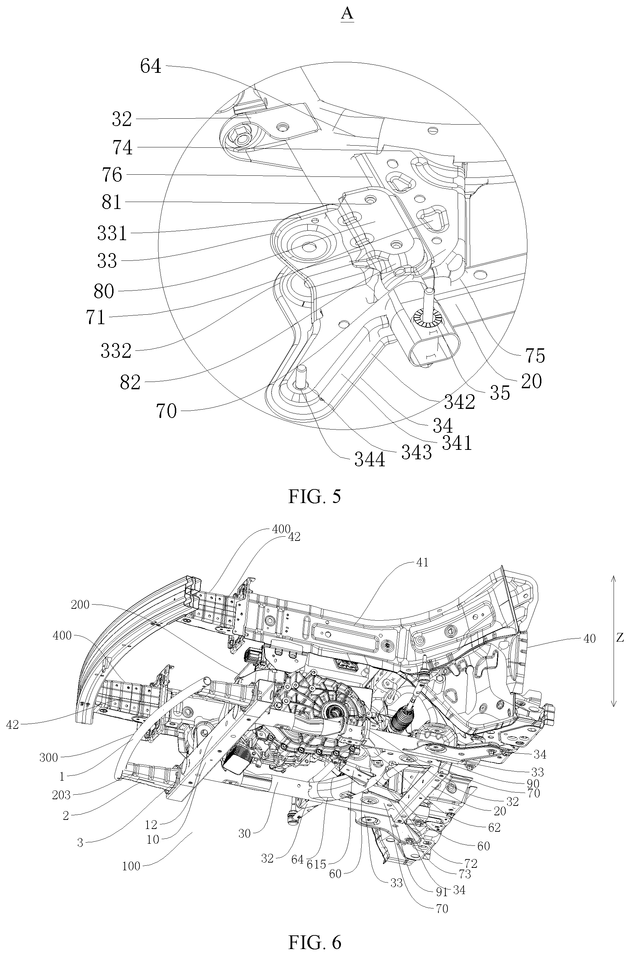

In the third direction, that is, in a Z direction in FIG. 6, a level of the upper surface of the second cross member 20 is flush with a level of the middle part of the subframe longitudinal member 30. With the sunken design, when the vehicle travels over the road surface with the raised obstacle, the obstacle first impacts the second cross member 20, and the impact force is partially or fully absorbed by the second cross member 20. Effective absorption of the impact force by the second cross member 20 can reduce the risk of the obstacle passing over the second cross member 20 and impacting the battery pack, providing the effective protection for the battery pack, and thus reducing the risk of the fire accident caused by the obstacle impacting the battery pack. In addition, a level of the upper surface of the second cross member 20 is flush with a level of the middle part of the subframe longitudinal member 30, which enables a partial structure of the second cross member 20 to be arranged between two adjacent subframe longitudinal members 30, further improving the structural strength and the rigidity of the subframe 100.

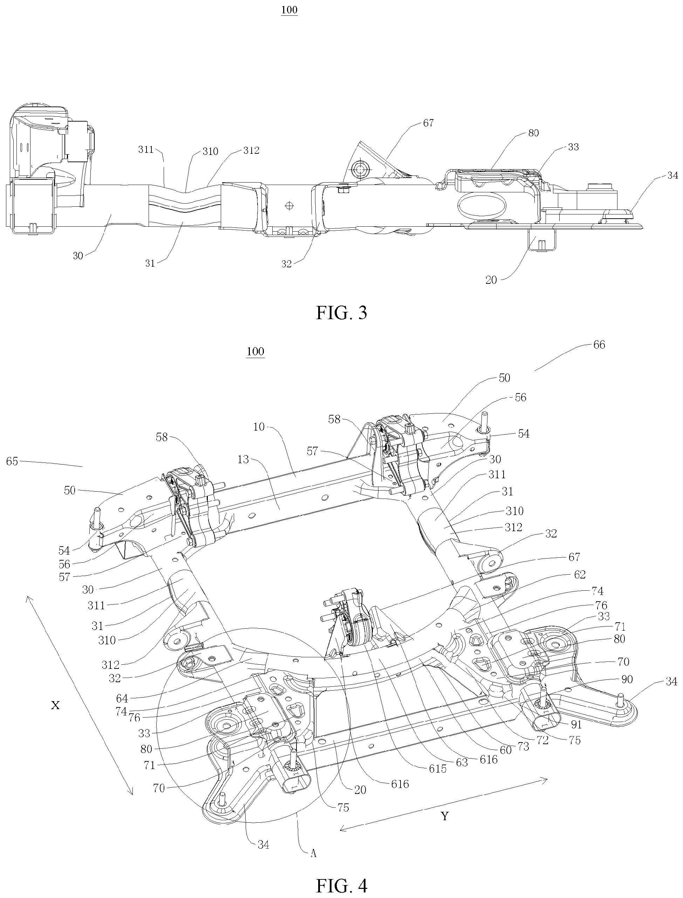

According to some embodiments of the present disclosure, as illustrated in FIG. 1 and FIG. 4, a cross-section of the second cross member 20 is of a rectangle. A long side dimension of the rectangle is L4 and a short side dimension of the rectangle is L5, where 50 mm≤L4≤60 mm, and 30 mm≤L5<50 mm.

Two long sides of the rectangle are opposite to and spaced apart from each other in the first direction. Two short sides of the rectangle are opposite to and spaced apart from each other in the third direction. The cross-section of the second cross member 20 is the rectangle. The long side dimension of the rectangle is L4 and the short side dimension of the rectangle is L5. The long side dimension L4 of the rectangle satisfies: 50 mm≤L4≤60 mm. The short side dimension L5 of the rectangle satisfies: 30 mm≤L5<50 mm. The long side dimension L4 of the rectangle may be set to 50 mm, 55 mm, or 60 mm, and the short side dimension L5 of the rectangle may be set to 30 mm, 40 mm, or 50 mm. The present disclosure takes a scenario where the long side dimension L4 of the rectangle is set to 60 mm and the short side dimension L5 of the rectangle is set to 40 mm as an example for illustration. Setting the long side dimension L4 of the rectangle to 60 mm and the short side dimension L5 of the rectangle to 40 mm can achieve a better adaptation with the subframe longitudinal member 30. In this way, a risk of fracture at a connection part between the second cross member 20 and the subframe longitudinal member 30 caused by an excessively large or an excessively small cross-section dimension of the second cross member 20 is reduced, improving the connection reliability between the second cross member 20 and the corresponding subframe longitudinal member 30, and thus enhancing operation safety of the vehicle.

Further, the strength of the second cross member 20 may be set based on several structural parameters. If the structural strength of the second cross member 20 is excessively high, the impact energy cannot be well absorbed by the second cross member 20, and the obstacle may pass over the second cross member 20 and impact the battery pack. If the structural strength of the second cross member 20 is excessively low, when the second cross member is impacted, the second cross member 20 deforms too rapidly to fully absorb the impact force. Also, the second cross member 20 cannot provide the effective protection for the battery pack. By setting the dimensions to satisfy 50 mm≤L4≤60 mm and 30 mm≤L5<50 mm, the cross-section dimension of the second cross member 20 can be appropriate, thus enabling the structural strength of the second cross member 20 to be appropriate. When the second cross member 20 is impacted, the impact energy can be effectively absorbed, reducing the risk of the obstacle passing over the second cross member 20 and impacting the battery pack. Also, a deformation speed can also be reduced when the second cross member 20 is impacted, thus providing the effective protection for the battery pack.

In some embodiments of the present disclosure, as illustrated in FIG. 1 to FIG. 4, each of outermost subframe longitudinal members 30 is provided with a control arm front mounting frame 32 at an outer wall of each of the outermost subframe longitudinal members 30. In the second direction, the second cross member 20 is arranged to correspond to the control arm front mounting frame 32.

In the second direction, each of the outermost subframe longitudinal members 30 is provided with the control arm front mounting frame 32 at the outer wall of each of the outermost subframe longitudinal members 30. One of two outermost subframe longitudinal members 30 is provided with the control arm front mounting frame 32, or each of the two outermost subframe longitudinal members 30 is provided with the control arm front mounting frame 32. The present disclosure takes a scenario where each of the two outermost subframe longitudinal members 30 is provided with the control arm front mounting frame 32 as an example for illustration. In the second direction, the second cross member 20 is arranged to correspond to the control arm front mounting frame 32. In the second direction, an orthographic projection of the second cross member 20 may overlap an orthographic projection of the control arm front mounting frame 32. The second cross member 20 can provide lateral rigidity support for the control arm front mounting frame 32, and is further configured to decompose and transfer a load from the control arm front mounting frame 32, thus improving a road noise transmission issue at a position where the control arm front mounting frame 32 is located and a fatigue strength issue in this region during traveling.

According to some embodiments of the present disclosure, as illustrated in FIG. 1 and FIG. 3, at least one of the plurality of subframe longitudinal members 30 is provided with a collapsible energy-absorption section 31. The collapsible energy-absorption section 31 has a collapsible recess structure 310 recessed inward towards the subframe longitudinal member 30 and disposed at an upper surface of the collapsible energy-absorption section 31.

At least one of the plurality of subframe longitudinal members 30 is provided with the collapsible energy-absorption section 31. For example, one subframe longitudinal member 30 of the subframe 100 may be provided with the collapsible energy-absorption section 31, or two subframe longitudinal members 30 of the subframe 100 may be provided with the collapsible energy-absorption section 31, or three subframe longitudinal members 30 of the subframe 100 may each be provided with the collapsible energy-absorption section 31, but the present disclosure is not limited thereto. Any other number of subframe longitudinal members 30 of the subframe 100 may each be provided with the collapsible energy-absorption section 31, as long as at least one of the plurality of subframe longitudinal members 30 is provided with the collapsible energy-absorption section 31. The present disclosure takes a scenario where each of the plurality of subframe longitudinal members 30 is provided with the collapsible energy-absorption section 31 as an example for illustration. Thus, the subframe longitudinal member 30 is provided with the collapsible energy-absorption section 31. When the vehicle is involved in the collision, the collapsible energy-absorption section 31 can absorb energy, reduce the intrusion amount into the passenger compartment, and alleviate compression of occupants in the passenger compartment, thus enhancing the safety performance of the vehicle.

The collapsible energy-absorption section 31 may have the collapsible recess structure 30 recessed inward towards the subframe longitudinal member 30 and disposed at the upper surface of the collapsible energy-absorption section 31. When the vehicle is involved in the collision, stress concentration occurs at the collapsible recess structure 310. The collapsible recess structure 310 guides the subframe longitudinal member 30 to deform at the collapsible energy-absorption section 31, enabling the subframe longitudinal member 30 to collapse rapidly and absorb the impact energy. In this way, transmission of impact loads to the passenger compartment is reduced, the intrusion amount into the passenger compartment is reduced, and the compression of the occupants in the passenger compartment is alleviated, thus protecting occupant safety, and enhancing the safety performance of the vehicle.

According to some embodiments of the present disclosure, as illustrated in FIG. 1 and FIG. 3, in the first direction, that is, in a length direction of the subframe longitudinal member 30, the collapsible recess structure 310 has a first surface 311 and a second surface 312 adjoining the first surface 311, and an angle is formed between the first surface 311 and the second surface 312.

In the length direction of the subframe longitudinal member 30, that is, in the first direction, the collapsible recess structure 310 may be designed as a recessed circular tube structure, thus forming a V-shaped collapsible recess structure 310. The collapsible recess structure 310 has the first surface 311 and the second surface 312 adjoining the first surface 311, and the angle is formed between the first surface 311 and the second surface 312. For example, the angle formed between the first surface 311 and the second surface 312 may be an obtuse angle, a right angle, and the like, but the present disclosure is not limited thereto. The angle formed between the first surface 311 and the second surface 312 may also be of any other type, as long as the angle is formed between the first surface 311 and the second surface 312. Thus, when the vehicle is involved in the collision, the angle is formed between the first surface 311 and the second surface 312, which can further guide the subframe longitudinal member 30 to deform and absorb the energy and further reduce the intrusion amount into the passenger compartment, thus better protecting the occupant safety, and further enhancing the safety performance of the vehicle.

According to some embodiments of the present disclosure, as illustrated in FIG. 1 and FIG. 3, the angle between the first surface 311 and the second surface 312 is α, where 125°≤α≤150°.

The angle between the first surface 311 and the second surface 312 is α, satisfying 125°≤α≤150°. For example, α may be 125°, 126°, 130°, 131°, 145°, 150°, etc., but the present disclosure is not limited thereto. α may also be any other value, as long as α satisfies: 125°≤α≤150°. In an exemplary embodiment of the present disclosure, the value of the angle α between the first surface 311 and the second surface 312 may be set and adjusted based on actual conditions. Thus, the angle α between the first surface 311 and the second surface 312 facilitates guiding the subframe longitudinal member 30 to deform at the collapsible recess structure 310 when the vehicle is involved in the collision, enabling the subframe longitudinal member 30 to deform and absorb the energy, further reducing the intrusion amount into the passenger compartment, protecting the occupant safety, and thus further enhancing the safety performance of the vehicle.

According to some embodiments of the present disclosure, as illustrated in FIG.1 and FIG. 3, in the second direction, at least one side of the collapsible energy-absorption section 31 protrudes beyond the corresponding subframe longitudinal member 30.

In the second direction, at least one side of the collapsible energy-absorption section 31 protrudes beyond a side surface of the corresponding subframe longitudinal member 30. For example, one side of the collapsible energy-absorption section 31 may protrude beyond the side surface of the corresponding subframe longitudinal member 30, or two sides of the collapsible energy-absorption section 31 may protrude beyond the side surfaces of the corresponding subframe longitudinal member 30. At least one side of the collapsible energy-absorption section 31 protrudes beyond the side surface of the corresponding subframe longitudinal member 30. Thus, on the premise of ensuring that the collapsible energy-absorption section 31 meets requirements for the structural strength and the rigidity, the subframe longitudinal member 30 is more facilitated to deform at the collapsible recess structure 310 when the vehicle is involved in the collision, enabling the subframe longitudinal member 30 to rapidly deform and absorb the energy, further reducing the intrusion amount into the passenger compartment, protecting the occupant safety, and thus further enhancing the safety performance of the vehicle.

According to some embodiments of the present disclosure, as illustrated in FIG. 1 and FIG. 3, in the second direction, a height by which the collapsible energy-absorption section 31 extends beyond the corresponding subframe longitudinal member 30 is D1, where: 5 mm≤D1≤10 mm.

In the second direction, the height by which the collapsible energy-absorption section 31 extends beyond the side surface of the corresponding subframe longitudinal member 30 may be D1, where 5 mm≤D1≤10 mm. For example, D1 may be 5 mm, 5.1 mm, 6 mm, 7 mm, 8 mm, 10 mm, etc., but the present disclosure is not limited thereto. D1 may also be any other value satisfying 5 mm≤D1≤10 mm, as long as D1 is the value in the range of 5 mm≤D1≤10 mm. In an exemplary embodiment of the present disclosure, the height D1 by which the collapsible energy-absorption section 31 extends beyond the side surface of the corresponding subframe longitudinal member 30 may be set and adjusted based on the actual conditions.

Thus, the height by which the collapsible energy-absorption section 31 protrudes beyond the side surface of the corresponding subframe longitudinal member 30 is set to 5 mm to 10 mm, which enables a height dimension by which the collapsible energy-absorption section 31 protrudes beyond the side surface of the corresponding subframe longitudinal member 30 to be appropriate. In this way, on the premise of ensuring that the collapsible energy-absorption section 31 meets the requirements for the structural strength and the rigidity, the subframe longitudinal member 30 is more facilitated to deform at the collapsible recess structure 310 when the vehicle is involved in the collision, enabling the subframe longitudinal member 30 to rapidly deform and absorb the energy, further reducing the intrusion amount into the passenger compartment, protecting the occupant safety, and thus further enhancing the safety performance of the vehicle.

According to some embodiments of the present disclosure, as illustrated in FIG. 1 and FIG. 3, a lower surface of the subframe longitudinal member 30 may be a flat surface. In this way, the lower surface of the subframe longitudinal member 30 can be flat, which can prevent the subframe longitudinal member 30 from being scratched by other components below and reduce a risk of damage to the subframe longitudinal member 30, thus enhancing the safety performance of the vehicle.

According to some embodiments of the present disclosure, as illustrated in FIG. 1 and FIG. 3, in the length direction of the subframe longitudinal member 30, a length dimension of the collapsible recess structure 310 is L1, where 100 mm≤L1≤105 mm.

In the length direction of the subframe longitudinal member 30, that is, in the first direction, the length dimension of the collapsible recess structure 310 may be L1, and L1 may be any value in the range of 100 mm≤L1≤105 mm. For example, L1 may be 100 mm, 101.1 mm, 102 mm, 103 mm, 105 mm, etc., but the present disclosure is not limited thereto. L1 may also be any other value in the range of 100 mm≤L1≤105 mm, as long as L1 satisfies 100 mm≤L1≤105 mm. In an exemplary embodiment of the present disclosure, the length dimension of the collapsible recess structure 310 may be set and adjusted based on the actual conditions.

Thus, the length dimension of the collapsible recess structure 310 is L1, and L1 satisfies: 100 mm≤L1≤105 mm, which enables the length dimension of the collapsible recess structure 310 to be appropriate. In this way, on the premise of ensuring that the subframe longitudinal member 30 meets the requirements for the structural strength and the rigidity, the collapsible recess structure 310 can absorb more energy when the vehicle is involved in the collision, further reducing the intrusion amount into the passenger compartment, protecting the occupant safety, and thus further enhancing the safety performance of the vehicle.

According to some embodiments of the present disclosure, as illustrated in FIG. 1 and FIG. 3, each of the plurality of subframe longitudinal members 30 is provided with the collapsible energy-absorption section 31. The collapsible energy-absorption sections 31 of the plurality of subframe longitudinal members 30 are arranged in the second direction.

Each of the plurality of subframe longitudinal members 30 may be provided with the collapsible energy-absorption section 31, and the collapsible energy-absorption sections 31 of the plurality of subframe longitudinal members 30 are arranged in the second direction, which enables the collapsible energy-absorption sections 31 to be uniformly distributed. When the vehicle is involved in the collision, a plurality of collapsible energy-absorption sections 31 of the plurality of subframe longitudinal members 30 may deform and absorb the energy simultaneously, thus absorbing more collision energy, further reducing the intrusion amount into the passenger compartment, protecting the occupant safety, and thus further enhancing the safety performance of the vehicle.

According to some embodiments of the present disclosure, as illustrated in FIG. 1 and FIG. 3, in the first direction, that is, in the length direction of the subframe longitudinal member 30, the collapsible recess structure 310 has a midpoint. A line connecting midpoints of the collapsible energy-absorption sections 31 of the plurality of subframe longitudinal members 30 forms a first straight line. The first straight line is located at a middle part of a powertrain of the vehicle.

Each of the plurality of subframe longitudinal members 30 may be provided with one collapsible energy-absorption section 31, and the plurality of collapsible energy-absorption sections 31 of the plurality of subframe longitudinal members 30 are arranged in an aligned manner in the second direction. In the length direction of the subframe longitudinal member 30, that is, in the first direction, the collapsible recess structure 310 of the collapsible energy-absorption section 31 has the midpoint. The line connecting the midpoints of the collapsible energy-absorption sections 31 of the plurality of subframe longitudinal members 30 may form the first straight line. The powertrain of the vehicle is mounted on the subframe 100 and located above the subframe 100. In the first direction, the first straight line is located at the middle part of the powertrain of the vehicle. In this way, the collapsible energy-absorption section 31 can guide the subframe 100 to deform downward together with the powertrain of the vehicle when the vehicle is involved in the collision, reducing a risk of the subframe 100 and the powertrain of the vehicle getting stuck in an engine compartment, reducing a risk of the subframe 100 and the powertrain intruding into the passenger compartment, and thus further enhancing the safety performance of the vehicle.

According to some embodiments of the present disclosure, as illustrated in FIG. 1 and FIG. 3, in the first direction, a spacing distance between the collapsible energy-absorption section 31 and the first cross member 10 is less than a spacing distance between the collapsible energy-absorption section 31 and the second cross member 20.

After the subframe 100 is mounted on the vehicle, the first cross member 10 is located at the front side of the second cross member 20. In the first direction, the spacing distance between the collapsible energy-absorption section 31 and the first cross member 10 may be less than the spacing distance between the collapsible energy-absorption section 31 and the second cross member 20. Such an arrangement enables the collapsible energy-absorption section 31 to be further away from the passenger compartment. When the vehicle is involved in the collision, the intrusion amount into the passenger compartment can be further reduced, protecting the occupant safety, and thus further enhancing the safety performance of the vehicle.

According to some embodiments of the present disclosure, as illustrated in FIG. 6, the subframe 100 is adapted to be mounted below the vehicle body longitudinal member 41 of the vehicle and fixed to the vehicle body longitudinal member 41. The vehicle body longitudinal member 41 has a plurality of energy-absorption structures 42 arranged in a length direction of the vehicle body longitudinal member 41. In the first direction, the plurality of energy-absorption structures 42 are respectively located at both sides of the collapsible energy-absorption section 31.

The subframe 100 is adapted to be mounted below the vehicle body longitudinal member 41 of the vehicle and fixed to the vehicle body longitudinal member 41. For example, the subframe 100 may be welded to the vehicle body longitudinal member 41, or the subframe 100 may be bolted to the vehicle body longitudinal member 41, but the present disclosure is not limited thereto. The subframe 100 may be connected to the vehicle body longitudinal member 41 in other manners, as long as the subframe 100 is mounted below the vehicle body longitudinal member 41 of the vehicle and fixed to the vehicle body longitudinal member 41.

The vehicle body longitudinal member 41 has the plurality of energy-absorption structures 42 arranged in the length direction of the vehicle body longitudinal member 41. When the vehicle is involved in the collision, the plurality of energy-absorption structures 42 of the vehicle body longitudinal member 41 can absorb energy generated by the collision, thus enhancing the safety performance of the vehicle. In the first direction, the plurality of energy-absorption structures 42 are respectively located at the both sides of the collapsible energy-absorption section 31, thus the energy-absorption structure 42 and the collapsible energy-absorption section 31 are arranged in a parallel mode. In addition, energy-absorption strength of the energy-absorption structure 42 is less than energy-absorption strength of the collapsible energy-absorption section 31.

In an exemplary embodiment of the present disclosure, when the vehicle is involved in a minor collision, the energy-absorption structure 42 of the vehicle body longitudinal member 41 absorbs the collision energy, and the collapsible energy-absorption section 31 of the subframe longitudinal member 30 does not need to perform collapsible energy-absorption. When the vehicle is involved in a severe collision, the energy-absorption structure 42 of the vehicle body longitudinal member 41 first crushes to absorb a part of the impact energy, and then the subframe longitudinal member 30 is compressed. After being subjected to an impact compressive force, the collapsible energy-absorption section 31 of the subframe longitudinal member 30 crushes along the collapsible recess structure 310, causing the subframe longitudinal member 30 to deform and absorb the energy. In this way, the intrusion amount into the passenger compartment is reduced, and the occupant safety is protected, thus further enhancing the safety performance of the vehicle.

According to some embodiments of the present disclosure, as illustrated in FIG. 1 and FIG. 4, the subframe 100 may further include a first suspension mounting frame 65, a second suspension mounting frame 66, and a third suspension mounting frame 67. Each of the first suspension mounting frame 65 and the second suspension mounting frame 66 is fixedly disposed at the first cross member 10 and the first suspension mounting frame 65 and the second suspension mounting frame 66 are arranged in the second direction. The third suspension mounting frame 67 is disposed at the third cross member 60.

Each of the first suspension mounting frame 65 and the second suspension mounting frame 66 is fixedly disposed at the first cross member 10 and the first suspension mounting frame 65 and the second suspension mounting frame 66 are arranged in the second direction. For example, each of the first suspension mounting frame 65 and the second suspension mounting frame 66 may be welded to the first cross member 10, or each of the first suspension mounting frame 65 and the second suspension mounting frame 66 may be bolted to the first cross member 10, but the present disclosure is not limited thereto. Each of the first suspension mounting frame 65 and the second suspension mounting frame 66 may also be connected to the first cross member 10 in other manners, as long as the first suspension mounting frame 65 and the second suspension mounting frame 66 are both fixedly disposed at the first cross member 10 and arranged in the second direction.

The third suspension mounting frame 67 is disposed at the third cross member 60. For example, the third suspension mounting frame 67 may be welded to the third cross member 60, or the third suspension mounting frame 67 may be bolted to the third cross member 60, but the present disclosure is not limited thereto. The third suspension mounting frame 67 may also be connected to the third cross member 60 in other manners, as long as the third suspension mounting frame 67 is disposed at the third cross member 60. Thus, the first suspension mounting frame 65 and the second suspension mounting frame 66 are disposed at the first cross member 10, and the third suspension mounting frame 67 is disposed at the third cross member 60, in such a manner that a plurality of mounting points can be provided at the subframe 100 for the powertrain 200 of the vehicle, enabling the powertrain 200 to be assembled to the subframe 100, and improving rigidity of the mounting point of the powertrain 200. The subframe 100 can provide sufficient fatigue strength and rigidity for the powertrain 200. When the vehicle is involved in the collision, a risk of the powertrain 200 crushing into the passenger compartment is reduced, and the intrusion amount of the powertrain 200 into the passenger compartment is reduced, thus enhancing the safety performance of the vehicle.

According to some embodiments of the present disclosure, as illustrated in FIG. 1, in the second direction, the third suspension mounting frame 67 is located between the first suspension mounting frame 65 and the second suspension mounting frame 66.

In the second direction, the third suspension mounting frame 67 is located between the first suspension mounting frame 65 and the second suspension mounting frame 66. For example, the third suspension mounting frame 67 may be located at a middle position between the first suspension mounting frame 65 and the second suspension mounting frame 66, or the third suspension mounting frame 67 may be located between the first suspension mounting frame 65 and the second suspension mounting frame 66 and closer to the first suspension mounting frame 65, or the third suspension mounting frame 67 may also be located between the first suspension mounting frame 65 and the second suspension mounting frame 66 and closer to the second suspension mounting frame 66, but the present disclosure is not limited thereto. The third suspension mounting frame 67 may also be located at other positions between the first suspension mounting frame 65 and the second suspension mounting frame 66, as long as the third suspension mounting frame 67 is located between the first suspension mounting frame 65 and the second suspension mounting frame 66 in the second direction.

Accordingly, a triangular positional relationship can be formed among the first suspension mounting frame 65, the second suspension mounting frame 66, and the third suspension mounting frame 67. The first suspension mounting frame 65, the second suspension mounting frame 66, and the third suspension mounting frame 67 can provide the mounting points for the powertrain 200 of the vehicle. After the powertrain 200 is mounted to the first suspension mounting frame 65, the second suspension mounting frame 66, and the third suspension mounting frame 67 via the suspension, by virtue of the principle of triangular stability, the first suspension mounting frame 65, the second suspension mounting frame 66, and the third suspension mounting frame 67 can reliably support the powertrain 200, enhancing the fatigue strength and the rigidity of the powertrain 200 of the vehicle and the subframe 100, effectively suppressing transmission of a vibration and howling noise from the powertrain 200 of the vehicle to the passenger compartment, and thus enhancing the safety performance of the vehicle.

According to some embodiments of the present disclosure, as illustrated in FIG. 1, the first suspension mounting frame 65 and the second suspension mounting frame 66 are respectively connected to the corresponding subframe longitudinal members 30.

The first suspension mounting frame 65 and the second suspension mounting frame 66 may be respectively connected to the corresponding subframe longitudinal members 30. For example, the first suspension mounting frame 65 may be welded to the corresponding subframe longitudinal member 30, or the first suspension mounting frame 65 may be bolted to the corresponding subframe longitudinal member 30. The second suspension mounting frame 66 may be welded to the corresponding subframe longitudinal member 30, or the second suspension mounting frame 66 may be bolted to the corresponding subframe longitudinal member 30. However, the present disclosure is not limited thereto. Each of the first suspension mounting frame 65 and the second suspension mounting frame 66 may also be connected to a corresponding one of the subframe longitudinal members 30 in other manners, as long as each of the first suspension mounting frame 65 and the second suspension mounting frame 66 is connected to a corresponding one of the subframe longitudinal members 30. Thus, the first suspension mounting frame 65 and the second suspension mounting frame 66 are respectively connected to the corresponding subframe longitudinal members 30, which can enhance rigidity of the first suspension mounting frame 65 and rigidity of the second suspension mounting frame 66, further suppressing the transmission of the vibration and the howling noise from the powertrain 200 of the vehicle to the passenger compartment, and thus further improving comfort of the vehicle.

According to some embodiments of the present disclosure, as illustrated in FIG. 1, the third suspension mounting frame 67 may be disposed at a middle part of the third cross member 60.

The third suspension mounting frame 67 may be disposed at the middle part of the third cross member 60. In this way, a load of the powertrain 200 of the vehicle can be uniformly dispersed to the third cross member 60, and support rigidity of the third suspension mounting frame 67 can also be improved, thus enhancing the safety performance of the vehicle. In addition, the third suspension mounting frame 67 can form a triangular positional relationship with the first suspension mounting frame 65 and the second suspension mounting frame 66 at the first cross member 10. By virtue of the principle of triangular stability, the first suspension mounting frame 65, the second suspension mounting frame 66, and the third suspension mounting frame 67 can provide the mounting points for the powertrain 200 of the vehicle. After the powertrain 200 is mounted to the first suspension mounting frame 65, the second suspension mounting frame 66, and the third suspension mounting frame 67 via the suspension, by virtue of the principle of triangular stability, the first suspension mounting frame 65, the second suspension mounting frame 66, and the third suspension mounting frame 67 can reliably support the powertrain 200, enhancing the fatigue strength and the rigidity of the powertrain 200 of the vehicle and the subframe 100, effectively suppressing the transmission of the vibration and the howling noise from the powertrain 200 of the vehicle to the passenger compartment, and thus further enhancing the safety performance of the vehicle.

According to some embodiments of the present disclosure, as illustrated in FIG. 1 and FIG. 2, each of the first suspension mounting frame 65 and the second suspension mounting frame 66 includes a connection base 50 and a suspension mounting plate 58. The connection base 50 and the suspension mounting plate 58 are arranged in the second direction. The connection base 50 and the suspension mounting plate 58 face each other and are spaced apart from each other, to define a suspension mounting space. The connection base 50 is also adapted to be fixedly connected to the vehicle body longitudinal member 41 of the vehicle.

Each of the first suspension mounting frame 65 and the second suspension mounting frame 66 includes the connection base 50 and the suspension mounting plate 58. In an exemplary embodiment of the present disclosure, the first suspension mounting frame 65 may be located at a left end portion of the first cross member 10 in the second direction, and the first suspension mounting frame 65 includes the connection base 50 and the suspension mounting plate 58. The second suspension mounting frame 66 may be located at a right end portion of the first cross member 10 in the second direction, and the second suspension mounting frame 66 includes the connection base 50 and the suspension mounting plate 58. The connection base 50 and the suspension mounting plate 58 are arranged in the second direction, and are opposite to and spaced apart from each other to define the suspension mounting space. In an exemplary embodiment of the present disclosure, in the second direction, the connection base 50 may be located at an outer side of the suspension mounting plate 58. Also, the connection base 50 is arranged to correspond to and spaced apart from the suspension mounting plate 58 to define the suspension mounting space. The suspension mounting space is configured for mounting of the suspension. In this way, the suspension is mounted more stably in the suspension mounting space. The suspension is mounted in the suspension mounting space, and a bolt is connected to the connecting base 50 by passing through the suspension mounting plate 58 and the suspension, in such a manner that the suspension is mounted more stably at the subframe 100, and the mounting stability of the suspension is enhanced.

In addition, the connection base 50 is also adapted to be fixedly connected to the vehicle body longitudinal member 41 of the vehicle. For example, the connection base 50 may be welded to the vehicle body longitudinal member 41 of the vehicle, or the connection base 50 may be bolted to the vehicle body longitudinal member 41 of the vehicle, but the present disclosure is not limited thereto, as long as the connection base 50 is fixedly connected to the vehicle body longitudinal member 41 of the vehicle. Thus, the connection base 50 is fixedly connected to the vehicle body longitudinal member 41 of the vehicle, which can improve rigidity of the connection base 50, improving the rigidity of the subframe 100, and further enhancing the safety performance of the vehicle.

According to some embodiments of the present disclosure, as illustrated in FIG.1, the connection base 50 may be fixedly to both the first cross member 10 and the corresponding subframe longitudinal member 30.

The connection base 50 may be fixedly connected to both the first cross member 10 and the corresponding subframe longitudinal member 30. For example, the connection base 50 may be welded to the first cross member 10 and the corresponding subframe longitudinal member 30, or the connection base 50 may be bolted to the first cross member 10 and the corresponding subframe longitudinal member 30, but the present disclosure is not limited thereto. The connection base 50 may also be connected to the first cross member 10 and the corresponding subframe longitudinal member 30 in other manners, as long as the connection base 50 is fixedly connected to both the first cross member 10 and the corresponding subframe longitudinal member 30. Thus, the connection base 50 is fixedly connected to both the first cross member 10 and the corresponding subframe longitudinal member 30, which enables formation of a rigidly fixed connection structure, enhancing the rigidity of the subframe 100, and further enhancing the safety performance of the vehicle.

According to some embodiments of the present disclosure, as illustrated in FIG. 1, the connection base 50 may define a first cavity structure. In the second direction, an inner end wall of the connection base 50 serves as a mounting end wall 51 for mounting the suspension. The mounting end wall 51 is perpendicular to the first cross member 10.

The connection base 50 may define the first cavity structure, which can improve rigidity and structural strength of the connection base 50. In an exemplary embodiment of the present disclosure, the first cavity structure of the connection base 50 may be formed by stamping and folding two plates, featuring a simple structure that reduces the number of components of the connection base 50, thus lowering manufacturing costs of the connection base 50, and further reducing the manufacturing costs of the subframe 100. In the second direction, the connection base 50 is disposed at a position adjacent to an end of the first cross member 10. An end wall of the connection base 50 at a side adjacent to a midpoint of the first cross member 10 may serve as an inner end wall, and the inner end wall of the connection base 50 serves as the mounting end wall 51 for mounting the suspension. The mounting end wall 51 is perpendicular to the first cross member 10. In this way, the rigidity of the connection base 50 can be improved. After the suspension is mounted to the connection base 50, the transmission of the vibration and the noise from the powertrain 200 to the passenger compartment can be more effectively suppressed, thus further improving riding comfort of the passengers.

According to some embodiments of the present disclosure, as illustrated in FIG. 1 and FIG. 2, the mounting end wall 51 may have a suspension mounting hole 52. The first cavity structure of the connection base 50 has a mounting ring 53 in the first cavity structure. The mounting ring 53 is disposed at the mounting end wall 51 and corresponds to the suspension mounting hole 52. The mounting ring 53 has an internal thread at an inner circumferential wall of the mounting ring 53.

The mounting end wall 51 may have the suspension mounting hole 52 configured for mounting of the suspension. In an exemplary embodiment of the present disclosure, a bolt may pass through the suspension mounting hole 52 to enable the mounting of the suspension. A plurality of suspension mounting holes 52 may be provided to enable the suspension to be mounted at the mounting end wall 51 more stably. The first cavity structure may have the mounting ring 53 in the first cavity structure. The mounting ring 53 may be a nut or other annular structure, as long as the first cavity structure has the mounting ring 53 in the first cavity structure. The mounting ring 53 may be welded to the mounting end wall 51 and corresponds to the suspension mounting hole 52. Also, the mounting ring 53 has the internal thread at the inner circumferential wall of the mounting ring 53. When mounting the suspension to the mounting end wall 51, the bolt is enabled to pass through the suspension mounting hole 52 and the mounting ring 53 sequentially, enabling the bolt to be fitted and fixed to the internal thread of the mounting ring 53, and thus enabling the suspension to be mounted to the connection base 50.

According to some embodiments of the present disclosure, as illustrated in FIG. 1 and FIG. 3, in the second direction, the connection base 50 is provided with a mounting portion 54 at an outer end of the connection base 50. The mounting portion 54 is adapted to be connected to the vehicle body longitudinal member 41.

In the second direction, the connection base 50 may be provided with the mounting portion 54 at the outer end of the connection base 50. For example, the connection base 50 may be welded to the mounting portion 54, or the connection base 50 may be bolted to the mounting portion 54, but the present disclosure is not limited thereto. The connection base 50 may be connected to the mounting portion 54 in other manners, as long as the connection base 50 is provided with the mounting portion 54 at the outer end of the connection base 50. The mounting portion 54 is connected to the vehicle body longitudinal member 41. For example, the mounting portion 54 may be connected to the vehicle body longitudinal member 41 by a plug-in connection, or the mounting portion 54 may be connected to the vehicle body longitudinal member 41 by a bolt connection, but the present disclosure is not limited thereto. The mounting portion 54 may also be connected to the vehicle body longitudinal member 41 in other manners, as long as the mounting portion 54 is connected to the vehicle body longitudinal member 41.

Thus, the connection base 50 can be connected to the vehicle body longitudinal member 41 through the mounting portion 54. Due to high rigidity of the vehicle body longitudinal member 41, connection between the connection base 50 and the vehicle body longitudinal member 41 can form a robust rigidly fixed connection structure, which in turn enhances the rigidity and the strength of the subframe 100, thus enhancing the safety performance of the vehicle.

According to some embodiments of the present disclosure, as illustrated in FIG. 1, the mounting portion 54 may be a mounting tube.

The mounting portion 54 may be the mounting tube. When the connection base 50 is connected to the vehicle body longitudinal member 41, the bolt can pass through the mounting tube to be connected to the vehicle body longitudinal member 41, enabling the connection base 50 to be fixedly connected to the vehicle body longitudinal member 41. Thus, the connection between the connection base 50 and the vehicle body longitudinal member 41 can be achieved, further realizing connection of the subframe 100 to the vehicle body longitudinal member 41.

According to some embodiments of the present disclosure, as illustrated in FIG. 1, FIG. 2, and FIG. 6, in the first direction, a front end wall 55 of the connection base 50 may be of an arc.

In the first direction, the front end wall 55 of the connection base 50 may be of the arc. In an exemplary embodiment of the present disclosure, the front end wall 55 may be an arc-shaped plate, and the remaining four faces may be formed from a single plate by stamping and folding. Thus, the connection base 50 may be a pentahedral structure formed by two plates welded together. The connection base 50 features a simple structure, which can simplify component composition of the subframe 100, thus reducing the manufacturing costs of the subframe 100.

According to some embodiments of the present disclosure, as illustrated in FIG. 1 and FIG. 2, in the second direction, a cross-sectional area of the connection base 50 decreases gradually from an inner side of the connection base 50 to an outer side of the connection base 50.

In the second direction, the connection base 50 is disposed adjacent to an end part of the first cross member 10. The end wall of the connection base 50 at a side adjacent to the midpoint of the first cross member 10 may serve as the inner end wall. In the second direction, the cross-sectional area of the connection base 50 may decrease gradually from the inner end wall of the connection base 50 to the outer end of the connection base 50. On the premise of not affecting a connection effect of the connection base 50, a gradual reduction in the cross-sectional area of the connection base 50 from the inner end wall to the outer end of the connection base 50 can reduce a volume of the connection base 50, which in turn helps to reduce a volume of the subframe 100. After the subframe 100 is mounted at the vehicle, a mounting space can be saved, and a weight of the connection base 50 can also be reduced, thus reducing a weight of the subframe 100, and further facilitating a lightweight design of the vehicle.

According to some embodiments of the present disclosure, as illustrated in FIG. 1 and FIG. 2, a cross-section of the connection base 50 is of a polygonal shape. The cross-section of the connection base 50 may be of a polygonal shape. For example, the cross-section of the connection base 50 may be a trapezoid, a pentagon and the like. Such an arrangement facilitates to enhance the rigidity of the connection base 50.

According to some embodiments of the present disclosure, as illustrated in FIG. 1 and FIG. 4, the connection base 50 may have an avoidance groove structure 56 adapted to correspond to a fastener for connecting the suspension. The avoidance groove structure 56 is configured to avoid a disassembly tool.

The connection base 50 may have the avoidance groove structure 56 formed at an outer circumferential wall of the connection base 50. The avoidance groove structure 56 may be an arc-shaped groove, a square groove, and the like, but the present disclosure is not limited thereto. The avoidance groove structure 56 may also be a groove structure of other shapes, as long as the avoidance groove structure 56 is capable of performing an avoidance function.

The powertrain 200 is connected to the suspension through a fastener. The fastener may be a bolt. In the second direction, the avoidance groove structure 56 is arranged to correspond to the fastener that connects the suspension to the powertrain 200. When the powertrain 200 mounted at the suspension needs to be disassembled, the avoidance groove structure 56 is configured to avoid the disassembly tool. For example, when the suspension requires maintenance, the powertrain 200 of the vehicle may first be hoisted by a movable hoisting device, then the fastener between the suspension and the powertrain 200 of the vehicle may be removed at a position of the avoidance groove structure 56 using the disassembly tool, and subsequently a connection member between the suspension and the connection base 50 may be removed. In this way, replacement of the suspension can be achieved without disassembling the subframe 100, which reduces the number of components to be disassembled and maintenance man-hour costs, thus reducing maintenance costs of the vehicle. Also, a risk of the disassembly tool causing collision and scratches to components at other positions can be avoided, further enhancing the safety performance of the vehicle.

According to some embodiments of the present disclosure, as illustrated in FIG. 1 and FIG. 4, the subframe 100 may further include a plurality of connection supports 57. Each of the plurality of connection supports 57 is connected between the first cross member 10 and the corresponding subframe longitudinal member 30, and is located at a connection corner where the first cross member 10 is connected to the corresponding subframe longitudinal member 30.

The subframe 100 may further include the plurality of connection supports 57. For example, the number of the connection supports 57 may be two, three, four, five, etc., but the present disclosure is not limited thereto. The other number of the connection supports 57 may also be possible, as long as the subframe 100 has a plurality of connection supports 57. Each of the plurality of connection supports 57 is connected between the first cross member 10 and the corresponding subframe longitudinal member 30, that is, the connection support 57 is connected to both the first cross member 10 and the corresponding subframe longitudinal member 30. For example, the connection support 57 may be welded to both the first cross member 10 and the corresponding subframe longitudinal member 30, or the connection support 57 may be bolted to both the first cross member 10 and the corresponding subframe longitudinal member 30, but the present disclosure is not limited thereto. The connection support 57 may also be connected to both the first cross member 10 and the corresponding subframe longitudinal member 30 in other manners, as long as each of the plurality of connection supports 57 is connected between the first cross member 10 and the corresponding subframe longitudinal member 30. In addition, each of the plurality of connection supports 57 is located at the connection corner where the first cross member 10 is connected to the corresponding subframe longitudinal member 30. In the present disclosure, each of the plurality of subframe longitudinal members 30 and the cross member 10 is connected to the connection support 57. For example, two connection supports 57 and two subframe longitudinal members 30 are provided, each of the two connection supports 57 is connected between the first cross member 10 and a corresponding one of the two subframe longitudinal members 30. By providing the connection support 57, the rigidity and the strength of the subframe 100 can be improved, thus enhancing the safety performance of the vehicle.

According to some embodiments of the present disclosure, as illustrated in FIG. 1, at least one connection base 50 is connected to the connection support 57 that is connected to the corresponding subframe longitudinal member 30.

Each of the first suspension mounting frame 65 and the second suspension mounting frame 66 may include one connection base 50. With respect to the first suspension mounting frame 65 and the second suspension mounting frame 66, at least one of the plurality of connection bases 50 is connected to the connection support 57 that is connected to the corresponding subframe longitudinal member 30. For example, one connection base 50 may be connected to the connection support 57 that is connected to the corresponding subframe longitudinal member 30, or two connection bases 50 may be connected to the connection support 57 that is connected to the corresponding subframe longitudinal member 30.

The present disclosure takes a scenario where one connection base 50 is connected to the connection support 57 that is connected to the corresponding subframe longitudinal member 30 as an example for illustration. In an exemplary embodiment of the present disclosure, due to insufficient connection positions, in the second direction, a connection base 50 on a left side is connected to the connection support 57 that is connected to the corresponding subframe longitudinal member 30, while a connection base 50 on a right side is not connected to the connection support 57 that is connected to the corresponding subframe longitudinal member 30.

The present disclosure is described by way of example in which two connection bases 50 are provided, with one connection base 50 being connected to the connection support 57 that is connected to the corresponding subframe longitudinal member 30. In an exemplary embodiment of the present disclosure, the two connection bases 50 are disposed adjacent to the two ends of the first cross member 10, respectively. After the subframe 100 is mounted on the vehicle, since a space on the left side is insufficient, in the second direction, the connection base 50 at a left end of the subframe 100 is connected to the connection support 57 that is connected to the corresponding subframe longitudinal member 30, thus causing the left connection base 50 to be closer to a middle part of the subframe 100. The connection base 50 at a right end of the subframe 100 is not connected to the connection support 57 that is connected to the corresponding subframe longitudinal member 30, which enables the subframe 100 to be mounted on the vehicle smoothly. In addition, the connection base 50 is connected to the connection support 57 that is connected to the corresponding subframe longitudinal member 30, which can further enhance the rigidity of the connection base 50, thus effectively suppressing the transmission of the vibration and the noise from the powertrain 200 of the vehicle to the passenger compartment, and further improving the riding comfort of the occupants.

According to some embodiments of the present disclosure, as illustrated in FIG. 1 and FIG. 2, in the second direction, the suspension mounting plate 58 is located at an inner side of the corresponding connection base 50.

In the second direction, the suspension mounting plate 58 may be located at the inner side of the corresponding connection base 50, which enables the suspension mounting plate 58 to be opposite to the connection base 50, to define the suspension mounting space for mounting the suspension. In addition, the suspension can be mounted more stably at the subframe 100, thus improving the mounting stability of the suspension, and further enhancing the safety performance of the vehicle.

According to some embodiments of the present disclosure, as illustrated in FIG. 1 and FIG. 2, the third suspension mounting frame 67 includes a first mounting portion 611 and a second mounting portion 612. The first mounting portion 611 is opposite to and spaced apart from the second mounting portion 612 in the second direction. Each of the first mounting portion 611 and the second mounting portion 612 has a first mounting hole 613. The first mounting portion 611 and/or the second mounting portion 612 has a fixedly disposed fitting structure 614 of an annular shape. The fitting structure 614 has an internal thread at an inner circumferential wall of the fitting structure 614 and the fitting structure 614 corresponds to the corresponding first mounting hole 613.

The suspension mounting frame may include the first mounting portion 611 and the second mounting portion 612. The first mounting portion 611 may be opposite to and spaced apart from the second mounting portion 612 in the second direction. The first mounting portion 611 and the second mounting portion 612 may have the same shape and the same size. Each of the first mounting portion 611 and the second mounting portion 612 may have the first mounting hole 613. The first mounting hole 613 at the first mounting portion 611 may be arranged to correspond to the first mounting hole 612 at the second mounting portion 612. Further, a fastener may pass through the first mounting hole 613 at the first mounting portion 611 and the first mounting hole 613 at the second mounting portion 612 to enable the mounting of the suspension.

The fitting structure 614 of an annular shape is fixedly disposed at the first mounting portion 611 and/or the second mounting portion 612. In an exemplary embodiment of the present disclosure, the annular fitting structure 614 may be fixedly disposed at each of the first mounting portion 611 and the second mounting portion 612, or the annular fitting structure 614 may be fixedly disposed at either first mounting portion 611 or the second mounting portion 612. The present disclosure takes a scenario where the annular fitting structure 614 is fixedly disposed at each of the first mounting portion 611 and the second mounting portion 612 as an example for illustration.

The annular fitting structure 614 may be a nut, an annular metal sheet or other fitting structures 614, but the present disclosure is not limited thereto. The annual fitting structure 614 may also be other fitting structures 614, and each of the first mounting portion 611 and the second mounting portion 612 may be welded to the annual fitting structure 614, or each of the first mounting portion 611 and the second mounting portion 612 may be integrally formed with the annual fitting structure 614, but the present disclosure is not limited thereto. Each of the first mounting portion 611 and the second mounting portion 612 may be connected to the annular fitting structure 614 in other manners, as long as the annular fitting structure 614 is fixedly disposed at each of the first mounting portion 611 and the second mounting portion 612.

The fitting structure 614 has the internal thread at the inner circumferential wall of the fitting structure 614 and corresponds to the corresponding first mounting hole 613, to facilitate the fastener to sequentially pass through the first mounting hole 613 and the fitting structure 614 for mounting the suspension between the first mounting portion 611 and the second mounting portion 612. In other words, mounting the suspension at a suspension mounting frame of the third cross member 60 is facilitated. Thus, the third cross member 60 can provide the mounting point for the suspension of the powertrain 200 of the vehicle, disperse the load of the powertrain 200 of the vehicle, and also improve the support rigidity of the suspension mounting frame, thus enhancing the safety performance of the vehicle.

According to some embodiments of the present disclosure, as illustrated in FIG. 1 and FIG. 4, the third suspension mounting frame 67 further includes a connection portion 615. The connection portion 615 is connected between the first mounting portion 611 and the second mounting portion 612. The connection portion 615 is disposed adjacent to a lower end of the first mounting portion 611 and a lower end of the second mounting portion 612.

The connection portion 615 is connected between the first mounting portion 611 and the second mounting portion 612. The connection portion 615 is disposed adjacent to the lower end of the first mounting portion 611 and the lower end of the second mounting portion 612. For example, the connection portion 615 is connected to the lower end of the first mounting portion 611 and the lower end of the second mounting portion 612. The connection portion 615 may be welded to the lower end of the first mounting portion 611 and the lower end of the second mounting portion 612, or the connection portion 615 may be integrally formed with the lower end of the first mounting portion 611 and the lower end of the second mounting portion 612, but the present disclosure is not limited thereto. The connection portion 615 may also be connected to the lower end of the first mounting portion 611 and the lower end of the second mounting portion 612 in other manners, as long as the connection portion 615 is connected between the first mounting portion 611 and the second mounting portion 612.

Thus, the connection portion 615 is connected between the first mounting portion 611 and the second mounting portion 612, in such a way that a lower end of the suspension mounting frame is formed as a closed structure, which further enhances the support rigidity of the suspension mounting frame and thus enhances the safety performance of the subframe 100.

According to some embodiments of the present disclosure, as illustrated in FIG. 1, the first mounting portion 611 has a bent portion 616 at an upper end of the first mounting portion 611, and/or the second mounting portion 612 has a bent portion 616 at an upper end of the second mounting portion 612. The bent portion 616 is connected to the third cross member 60. In the second direction, the bent portion 616 is bent towards the outside of the third cross member 60.

The first mounting portion 611 may have the bent portion 616 at the upper end of the first mounting portion 611, and/or the second mounting portion 612 may have the bent portion 616 at the upper end of the second mounting portion 612. In an exemplary embodiment of the present disclosure, the bent portion 616 may be disposed at each of the upper end of the first mounting portion 611 and the upper end of the second mounting portion 612, or the first mounting portion 611 may be disposed at either the upper end of the first mounting portion 611 or the upper end of the second mounting portion 612. The present disclosure takes a scenario where the bent portion 616 is disposed at each of the upper end of the first mounting portion 611 and the upper end of the second mounting portion 612 as an example for illustration. The bent portion 616 is connected to the third cross member 60. For example, the bent portion 616 may be welded to the third cross member 60, or the bent portion 616 may be bolted to the third cross member 60, but the present disclosure is not limited thereto. The bent portion 616 may be connected to the third cross member 60 in other manners, as long as the bent portion 616 is connected to the third cross member 60.

In addition, in the second direction, the bent portion 616 is bent towards the outside of the third cross member 60. Such an arrangement enables an upper end of the suspension mounting frame to extend towards the both sides of the third cross member 60 to form a splayed shape, which can better enhance the structural rigidity of the suspension mounting frame 61 and also enable the load of the powertrain 200 of the vehicle to be dispersed to the both sides of the third cross member 60, further improving the support rigidity of the suspension mounting frame.

According to some embodiments of the present disclosure, as illustrated in FIG.1 and FIG. 2, at least one of the plurality of subframe longitudinal members 30 penetrates the first cross member 10. The connection base 50 corresponding to the subframe longitudinal member 30 that penetrates the first cross member 10 is located above an overlapping region where the corresponding subframe longitudinal member 30 overlaps the first cross member 10.

At least one of the plurality of subframe longitudinal members 30 may penetrate the first cross member 10. For example, two subframe longitudinal members 30 may be provided. In the second direction, a left subframe longitudinal member 30 penetrates the first cross member 10, or a right subframe longitudinal member 30 penetrates the first cross member 10, or each of the two subframe longitudinal members 30 penetrates the first cross member 10. The present disclosure takes a scenario where each of the two subframe longitudinal members 30 penetrates the first cross member 10 as an example for illustration. Thus, the subframe longitudinal member 30 penetrating the first cross member 10 can improve the rigidity and the strength of the subframe 100, enhancing the safety performance of the vehicle.

The connection base 50 corresponding to the subframe longitudinal member 30 that penetrates the first cross member 10 is located above the overlapping region where the corresponding subframe longitudinal member 30 overlaps the first cross member 10. Such an arrangement can further improve the rigidity of the subframe 100, enhancing the safety performance of the vehicle.

According to some embodiments of the present disclosure, as illustrated in FIG.1 and FIG. 6, in the third direction of the subframe 100, an orthographic projection of the subframe longitudinal member 30 overlaps an orthographic projection of the first cross member 10 to form a projection overlapping region. An orthographic projection of the connection base 50 overlaps the corresponding projection overlapping region. The third direction, the first direction, and the second direction are perpendicular to each other.

As illustrated in FIG. 1 and FIG. 6, the first direction may be the X direction in FIG. 1, the second direction may be the Y direction in FIG. 1, and the third direction may be the Z direction in FIG. 6. Also, the third direction, the first direction, and the second direction are perpendicular to each other.

In the third direction of the subframe 100, the orthographic projection of the subframe longitudinal member 30 may overlap the orthographic projection of the first cross member 10 to form the projection overlapping region, that is, the subframe longitudinal member 30 overlaps the first cross member 10 to form an overlapping region, thus improving the rigidity of subframe 100. The orthographic projection of the connection base 50 overlaps the corresponding projection overlapping region, that is, the connection 50 overlaps each of the subframe longitudinal member 30 and the first cross member 10, which can further improve the rigidity of the subframe 100, enhancing the safety performance of the vehicle.

According to some embodiments of the present disclosure, as illustrated in FIG. 1 and FIG. 2, in the second direction, an outer wall of each of the two outermost subframe longitudinal members 30 is connected to the control arm front mounting frame 32. The two ends of the third cross member 60 are arranged to correspond to the control arm front mounting frames 32 of the corresponding subframe longitudinal members 30, respectively.

In the second direction, each of the outermost subframe longitudinal members 30 is connected to the control arm front mounting frame 32. For example, the subframe longitudinal member 30 may be welded to the control arm front mounting frame 32, or the subframe longitudinal member 30 may be bolted to the control arm front mounting frame 32, but the present disclosure is not limited thereto. The subframe longitudinal member 30 may also be connected to the control arm front mounting frame 32 in other manners, as long as the outer wall of each of the outermost subframe longitudinal members 30 is connected to the control arm front mounting frame 32 in the second direction. Thus, a fatigue load of the control arm front mounting frame 32 can be better dispersed to the subframe longitudinal member 30.

The two ends of the third cross member 60 are arranged to correspond to the control arm front mounting frames 32 of the corresponding subframe longitudinal members 30, respectively. In this way, the third cross member 60 can support the control arm front mounting frame 32 of the corresponding subframe longitudinal member 30. A lateral support effect of the third cross member 60 can enhance the rigidity of the control arm front mounting frame 32 and reduce the transmission of road noise to the passenger compartment through the control arm front mounting frame 32, lowering driving noise of the vehicle, and further improving the riding comfort of the vehicle. In addition, the fatigue load of the control arm front mounting frame 32 is better dispersed to the third cross member 60, facilitating the fatigue load of the control arm front mounting frame 32 to be better dispersed to the entire subframe 100, thus improving fatigue durability of the control arm front mounting frame 32.

According to some embodiments of the present disclosure, as illustrated in FIG. 1, the two ends of the third cross member 60 are arranged to correspond to rear ends of the corresponding control arm front mounting frames 32, respectively. In the second direction, the end of the third cross member 60 is arranged to correspond to the rear end of the corresponding control arm front mounting frame 32. The first direction is a front-rear direction of the subframe 100. Such an arrangement enables the third cross member 60 to reliably support the control arm front mounting frame 32 and further enhances the rigidity of the control arm front mounting frame 32, reducing the transmission of the road noise to the passenger compartment through the control arm front mounting frame 32, further reducing the driving noise of the vehicle, and further improving the riding comfort of the vehicle.

According to some embodiments of the present disclosure, as illustrated in FIG. 1 and FIG. 4, the third cross member 60 may include a first cross member body 62, a second cross member body 63, and a third cross member body 64. The second cross member body 63 is connected between the first cross member body 62 and the third cross member body 64. The second cross member body 63 is constructed as an arc-shaped structure protruding towards the second cross member 20. The first cross member body 62 and the third cross member body 64 are respectively connected to the two outermost subframe longitudinal members 30.

The third cross member 60 may include the first cross member body 62, the second cross member body 63, and the third cross member body 64. The second cross member body 63 is connected between the first cross member body 62 and the third cross member body 64. That is, two ends of the second cross member body 63 are connected to the first cross member body 62 and the third cross member body 64, respectively. For example, the second cross member body 63 may be welded to the first cross member body 62 and the third cross member body 64, or the second cross member body 63 may be integrally formed with the first cross member body 62 and the third cross member body 64, but the present disclosure is not limited thereto. The second cross member body 63 may also be connected to the first cross member body 62 and the third cross member body 64 in other manners, as long as the second cross member body 63 is connected between the first cross member body 62 and the third cross member body 64.

The first cross member body 62 and the third cross member body 64 are respectively connected to the two outermost subframe longitudinal members 30. For example, the first cross member body 62 and the third cross member body 64 may be respectively welded to the two outermost subframe longitudinal members 30, or the first cross member body 62 and the third cross member body 64 may be respectively bolted to the two outermost subframe longitudinal members 30, but the present disclosure is not limited thereto. The first cross member body 62 and the third cross member body 64 may also be respectively connected to the two outermost subframe longitudinal members 30 in other manners, as long as the first cross member body 62 and the third cross member body 64 are respectively connected to the two outermost subframe longitudinal members 30.

The second cross member body 63 is constructed as the arc-shaped structure protruding towards the second cross member 20. In an exemplary embodiment of the present disclosure, the second cross member body 63 may be constructed as a "C" shape or a substantially "C" shape, and a cross-section of the second cross member body 63 may have an oblong shape. Such an arrangement enables enhancement of the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, as illustrated in FIG. 1 and FIG. 6, a height dimension of the second cross member body 63 in the third direction of the subframe 100 may be H1; and a width dimension of the second cross member body 63 in the first direction of the subframe 100 is H2, satisfying: H2<H1. The first direction, the second direction, and the third direction are perpendicular to each other.

As illustrated in FIG. 3, the Z direction may be the third direction corresponding to the height direction of the vehicle. The height dimension of the second cross member body 63 in the third direction of the subframe 100 may be H1; and the width dimension of the second cross member body 63 in the first direction of the subframe 100 is H2, satisfying: H2<H1. The first direction, the second direction, and the third direction are perpendicular to each other. Such an arrangement enables the enhancement of the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, 70 mm≤H1≤90 mm.

The height dimension H1 of the second cross member body 63 in the third direction of the subframe 100 may be any value in the range of 70 mm≤H1≤90 mm. For example, H1 may be 70 mm, 70.1 mm, 71 mm, 72 mm, 80 mm, 90 mm, etc., but the present disclosure is not limited thereto. H1 may also be any other value in the range of 70 mm≤H1≤ 90 mm, as long as H1 is the value in the range of 70 mm≤H1≤ 90 mm. Thus, setting of the height dimension H1 of the second cross member body 63 in the third direction of the subframe 100 in the range of 70 mm≤H1≤90 mm enables the enhancement of the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, as illustrated in FIG. 1 and FIG. 4, the first cross member body 62 and/or the third cross member body 64 has a flat structure.

The first cross member body 62 and/or the third cross member body 64 has the flat structure. In an exemplary embodiment of the present disclosure, each of the first cross member body 62 and the third cross member body 64 may have the flat structure, or the first cross member body 62 has the flat structure, or the third cross member body 64 has the flat structure. The present disclosure takes a scenario where each of the first cross member body 62 and the third cross member body 64 has the flat structure as an example for illustration. Thus, by constructing each of the first cross member body 62 and the third cross member body 64 as the flat structure, connecting each of the first cross member body 62 and the third cross member body 64 to a corresponding one of the plurality of subframe longitudinal members 30 is facilitated. In an exemplary embodiment of the present disclosure, connection parts, where the first cross member body 62 and the third cross member body 64 are connected to the respective subframe longitudinal members 30, are arranged to correspond to the corresponding control arm front mounting frames 32, which can enhance the rigidity of the control arm front mounting frame 32 and reduce noise transmission from the mounting point of the control arm front mounting frame 32. In addition, the control arm front mounting frame 32 can better disperse the fatigue load to the subframe 100 through the third cross member 60, thus improving the fatigue durability of the subframe 100.

According to some embodiments of the present disclosure, as illustrated in FIG. 1 and FIG. 6, in the third direction of the subframe 100, an orthographic projection of the third cross member 60 is located at a rear side of an orthographic projection of the powertrain of the vehicle.

In the third direction of the subframe 100, the orthographic projection of the third cross member 60 may be located at the rear side of the orthographic projection of the powertrain 200 of the vehicle, that is, the third cross member 60 is located at a rear end of the powertrain 200 of the vehicle, which facilitates the subframe 100 to provide the mounting point for the suspension of the powertrain 200 of the vehicle, thus dispersing the load of the powertrain 200 of the vehicle to the both sides of the third cross member 60, and further enhancing support rigidity of the subframe 100.

According to some embodiments of the present disclosure, as illustrated in FIG. 1 and FIG. 4, the subframe 100 further includes a support frame 70. The support frame 70 is located between the third cross member 60 and the second cross member 20 in the first direction. The support frame 70 is connected between the third cross member 60 and the second cross member 20.

The support frame 70 is located between the third cross member 60 and the second cross member 20 in the first direction. The support frame 70 is connected between the third cross member 60 and the second cross member 20. For example, the support frame 70 may be welded to the third cross member 60 and the second cross member 20, or the support frame 70 may be bolted to the third cross member 60 and the second cross member 20, but the present disclosure is not limited thereto. The support frame 70 may also be connected to the third cross member 60 and the second cross member 20 in other manners, as long as the support frame 70 is located between the third cross member 60 and the second cross member 20 in the first direction and connected between the third cross member 60 and the second cross member 20.

In this way, the support frame 70 is connected between the third cross member 60 and the second cross member 20, which can provide support for the third cross member 60 in a length direction (i.e. front-rear direction) of the vehicle, enhancing rigidity of the third cross member 60 in the length direction of the vehicle, and further enhancing the rigidity of the subframe 100 in the length direction of the vehicle. After the suspension mounting frame is mounted at the subframe 100, longitudinal rigidity of the suspension mounting frame can be improved, the transmission of the howling noise from the powertrain 200 of the vehicle in the length direction of the vehicle can be reduced, and the transmission of the vibration and the noise from the powertrain 200 to the passenger compartment can be effectively suppressed, thus improving the riding comfort of the passengers.

According to some embodiments of the present disclosure, as illustrated in FIG.1 and FIG. 4, a plurality of support frames 70 are provided and arranged in the second direction. Two outermost support frames 70 are respectively disposed adjacent to the two ends of the third cross member 60 and respectively connected to two outermost subframe longitudinal members 30.

The plurality of support frames 70 may be provided. For example, the number of the support frame 70 may be two, three, four, etc., but the present disclosure is not limited thereto. Other numbers of the support frames 70 may also be provided, as long as a plurality of support frames 70 are provided. The plurality of support frames 70 are arranged in the second direction, and the two outermost support frames 70 are respectively disposed adjacent to the two ends of the third cross member 60. For example, the support frame 70 may be welded to the third cross member 60, or the support frame 70 may be bolted to the third cross member 60, but the present disclosure is not limited thereto. The support frame 70 may also be connected to the third cross member 60 in other manners, as long as the two outermost support frames 70 are respectively disposed adjacent to the two ends of the third cross member 60. In addition, the two outermost support frames 70 are respectively connected to the two outermost subframe longitudinal members 30. For example, the support frame 70 may be welded to the subframe longitudinal member 30, or the support frame 70 may be bolted to the subframe longitudinal member 30, but the present disclosure is not limited thereto. The support frame 70 may also be connected to the subframe longitudinal member 30 in other manners, as long as the two outermost support frames 70 are respectively connected to the two outermost subframe longitudinal members 30.

Thus, the two outermost support frames 70 are respectively disposed adjacent to the two ends of the third cross member 60, which can support the third cross member 60 in the length direction of the vehicle, greatly improving the rigidity of the third cross member 60 in the length direction of the vehicle, thus improving the rigidity of the subframe 100 in the length direction of the vehicle. In addition, the two outermost support frames 70 are respectively connected to the two outermost subframe longitudinal members 30, which can further enhance structural connection strength of the subframe 100, preventing a phenomenon of stress concentration on the subframe 100, and thus further enhancing the fatigue strength of the subframe 100.

According to some embodiments of the present disclosure, as illustrated in FIG. 1, a cross-section of the support frame 70 may be in a triangular shape.

The cross-section of the support frame 70 may be in the triangular shape, or the cross-section of the support frame 70 may be in a substantially triangular shape. The cross-section of the support frame 70 taken along an XY plane is in the triangular shape. In an exemplary embodiment of the present disclosure, two support frames 70 are provided. The two support frames 70 are spaced apart from each other in the second direction and respectively disposed at the two ends of the third cross member 60. A front end of each support frame 70 is welded to the third cross member 60, an outer side edge of each support frame 70 is welded to an inner side wall of the corresponding subframe longitudinal member 30, and a rear end of each support frame 70 is welded to the second cross member 20. By virtue of the principle of triangular stability, the support frame 70 can provide support for the third cross member 60 in the length direction of the vehicle, greatly improving the rigidity of the third cross member 60 in the length direction of the vehicle, and further improving the rigidity of the subframe 100 in the length direction of the vehicle.

Also, the support frame 70 is simultaneously connected at the intersections of the second cross member 20, the third cross member 60, and the corresponding subframe longitudinal member 30, which can further enhance the structural connection strength of the subframe 100, avoiding the phenomenon of the stress concentration on the subframe 100, and further improving the fatigue strength of the subframe 100.

According to some embodiments of the present disclosure, as illustrated in FIG. 1 and FIG. 4, the support frame 70 may have a steering gear mounting hole 71.

The support frame 70 may have the steering gear mounting hole 71. The steering gear mounting hole 71 may be located at a central part of the support frame 70, or the steering gear mounting hole 71 may also be located at a part of the support frame 70 that is close to an edge of the support frame 70, but the present disclosure is not limited thereto. The steering gear mounting hole 71 may also be located at other parts of the support frame 70, as long as the support frame 70 has the steering gear mounting hole 71. Thus, the support frame 70 has the steering gear mounting hole 71 to facilitate mounting of a steering gear.

According to some embodiments of the present disclosure, as illustrated in FIG. 1 and FIG. 4, the support frame 70 may include a first support frame plate 72 and a second support frame plate 73. The first support frame plate 72 and the second support frame plate 73 are arranged in the third direction of the subframe 100, and connected to each other. The first support frame plate 72 and the second support frame plate 73 jointly define a second cavity structure.

As illustrated in FIG. 3, the third direction may be the Z direction. In other words, the third direction may be the height direction of the vehicle, the first direction is the length direction of the vehicle, and the second direction is the width direction of the vehicle. The first direction, the second direction, and the third direction are perpendicular to each other.

The support frame 70 may include the first support frame plate 72 and the second support frame plate 73. In an exemplary embodiment of the present disclosure, the first support frame plate 72 and the second support frame plate 73 may be made of two identical channel steel plates, such that the first support frame plate 72 and the second support frame plate 73 can jointly define the second cavity structure. The first support frame plate 72 and the second support frame plate 73 are arranged in the third direction of the subframe 100, and connected to each other. The first support frame plate 72 may be welded to the second support frame plate 73, or the first support frame plate 72 may be bolted to the second support frame plate 73, but the present disclosure is not limited thereto. The first support frame plate 72 may be connected to the second support frame plate 73 in other manners, as long as the first support frame plate 72 and the second support frame plate 73 are arranged in the third direction of the subframe 100, and are connected to each other. Thus, the support frame 70 is constructed as the second cavity structure formed by connection of two plates, which can reduce a weight of the support frame 70, reducing the weight of the subframe 100, and further reducing the manufacturing costs of the subframe 100. Stability and strength of the support frame 70 can also be improved, further improving durability of the support frame 70.

According to some embodiments of the present disclosure, as illustrated in FIG. 1, the support frame 70 has a first side connection end 74 and a second side connection end 75 opposite to the first side connection end 74. The first side connection end 74 is fixedly connected to the third cross member 60. The second side connection end 75 is fixedly connected to the second cross member 20.

The first side connection end 74 is arranged opposite to the second side connection end 75 in the first direction, and the first side connection end 74 is fixedly connected to the third cross member 60. For example, the first side connection end 74 may be welded to the third cross member 60, or the first side connection end 74 may be bolted to the third cross member 60, but the present disclosure is not limited thereto. The first side connection end 74 may also be connected to the third cross member 60 in other manners, as long as the first side connection end 74 is fixedly connected to the third cross member 60. Thus, the first side connection end 74 is fixedly connected to the third cross member 60, such that the third cross member 60 can be supported in the front-rear direction of the vehicle, improving the longitudinal rigidity of the third cross member 60 in the front-rear direction of the vehicle.

The second side connection end 75 is fixedly connected to the second cross member 20. For example, the second side connection end 75 may be welded to the second cross member 20, or the second side connection end 75 may be bolted to the second cross member 20, but the present disclosure is not limited thereto. The second side connection end 75 may also be connected to the second cross member 20 in other manners, as long as the second side connection end 75 is fixedly connected to the second cross member 20. The support frame 70 is adapted to be mounted between the third cross member 60 and the second cross member 20 of the subframe 100 and adapted to be connected between the third cross member 60 and the second cross member 20, which can enhance the structural connection strength of the subframe 100 and also avoid the stress concentration, thus improving the fatigue strength of the subframe 100, reducing the noise transmission from the powertrain 200 of the vehicle in the front-rear direction of the vehicle, further reducing noise pollution of the vehicle.

According to some embodiments of the present disclosure, as illustrated in FIG. 1, the support frame 70 further has a third side connection end 76. The third side connection end 76 is located between the first side connection end 74 and the second side connection end 75, and is adjacent to both the first side connection end 74 and the second side connection end 75. In the second direction, an inner side surface of the outermost subframe longitudinal member 30 is fixedly connected to the third side connection end 76 of the corresponding support frame 70.

The third side connection end 76 is located between the first side connection end 74 and the second side connection end 75, and is adjacent to both the first side connection end 74 and the second side connection end 75.

The third side connection end 76 is fixedly connected to the inner side surface of the corresponding outermost subframe longitudinal member 30. For example, the third side connection end 76 may be welded to the inner side surface of the corresponding subframe longitudinal member 30, or the third side connection end 76 may be bolted to the inner side surface of the corresponding subframe longitudinal member 30, but the present disclosure is not limited thereto. The third side connection end 76 may be connected to the inner side surface of the corresponding subframe longitudinal member 30 in other manners, as long as the third side connection end 76 is fixedly connected to the inner side surface of corresponding subframe longitudinal member 30 of the subframe 100. Thus, by connecting the support frame 70 at the intersections of the third cross member 60, the second cross member 20, and the corresponding subframe longitudinal member 30, and by virtue of the principle of triangular stability, the structural connection strength of the subframe 100 can be enhanced, and the phenomenon of the stress concentration on the subframe 100 can also be avoided, thus improving the stability and the fatigue strength of the subframe 100.

According to some embodiments of the present disclosure, as illustrated in FIG. 1, a length dimension of the third cross member is L1. In a length direction of the third cross member 60, a connection length between the support frame 70 and the third cross member 60 is L2, satisfying: 0.1L1≤ L2≤0.3L1.

In the length direction of the third cross member 60, the connection length between the support frame 70 and the third cross member 60 is L2. L2 may be any value that satisfies 0.1 L1≤L2≤0.3 L1, for example, L2 may be 0.1L1, 0.11L1, 0.12L1, 0.15L1, 0.2L1, 0.3 L1, etc., but the present disclosure is not limited thereto. L2 may also be any other value in the range of 0.1L1≤L2≤0.3L1, as long as the value of L2 satisfies 0.1L1≤L2≤0.3L1. Thus, the value of L2 satisfying 0.1L1≤L2≤0.3L1 enables the support frame 70 to be firmly connected to the third cross member 60, improving the rigidity of the third cross member 60, and preventing the support frame 70 from being excessively large in volume which would interfere with other structures. As a result, structural compactness of the subframe 100 is improved, further reducing the manufacturing costs of the subframe 100.

According to some embodiments of the present disclosure, as illustrated in FIG. 1, a length dimension of the second cross member 20 is L8. In a length direction of the second cross member 20, a connection length between the support frame 70 and the second cross member 20 is L9, satisfying 0.2 L8≤L9≤0.25 L8.

In the length direction of the second cross member 20, the connection length between the support frame 70 and the second cross member 20 may be L9, L9 may be any value in the range of 0.2L8≤L9≤0.25L8, for example, L9 may be 0.2L8, 0.21L8, 0.22L8, 0.25L8, etc., but the present disclosure is not limited thereto. L9 may also be any other value in the range of 0.2L8≤L9≤0.25L8, as long as the value of L9 satisfies 0.2L8≤L9≤0.25L8. Thus, the value of L9 satisfying 0.2L8≤L9≤0.25L8 enables the support frame 70 to be firmly connected to the second cross member 20, improving the rigidity of the second cross member 20, and preventing the support frame 70 from being excessively large in volume which would interfere with other structures. As a result, the structural compactness of the subframe 100 is improved, further reducing the manufacturing costs of the subframe 100.

According to some embodiments of the present disclosure, as illustrated in FIG. 1, a connection length between the support frame 70 and the third cross member 60 is greater than a connection length between the support frame 70 and the second cross member 20.

The connection length between the support frame 70 and the third cross member 60 may be greater than the connection length between the support frame 70 and the second cross member 20. Thus, the support frame 70 can provide more support forces for the third cross member 60, thus further improving the rigidity of the third cross member 60 in the front-rear direction of the vehicle.

According to some embodiments of the present disclosure, as illustrated in FIG. 1, the support frame 70 is at least partially lapped on an upper surface of the second cross member 20.

The support frame 70 at least partially overlaps the upper surface of the second cross member 20. For example, the support frame 70 entirely overlaps the upper surface of the second cross member 20, or at least half of the support frame 70 overlaps the upper surface of the second cross member 20, or at least one third of the support frame 70 overlaps the upper surface of the second cross member 20, but the present disclosure is not limited thereto. The support frame 70 may also partially overlaps the upper surface of the second cross member 20 in other proportions, as long as the support frame 70 at least partially overlaps the upper surface of the second cross member 20. Such an arrangement enables the support frame 70 to be connected to the second cross member 20 more firmly, further improving the structural connection strength of the subframe 100, and thus further enhancing the safety performance of the vehicle.

According to some embodiments of the present disclosure, as illustrated in FIG. 1, at least one of the plurality of subframe longitudinal members 30 may penetrate the first cross member 10. For example, two subframe longitudinal members 30 may be provided. In the second direction, one of the left subframe longitudinal member 30 and the right subframe longitudinal member 30 penetrates the first cross member 10, or each of the two subframe longitudinal members 30 penetrates the first cross member 10. The present disclosure takes a scenario where each of the two subframe longitudinal members 30 penetrates the first cross member 10 as an example for illustration. Thus, the subframe longitudinal member 30 penetrating the first cross member 10 can improve the rigidity and the strength of the subframe 100, enhancing the safety performance of the vehicle.

In some embodiments of the present disclosure, as illustrated in FIG. 2, the first cross member 10 has longitudinal member mounting holes 11. The subframe longitudinal member 30 extends through a corresponding longitudinal member mounting hole 11.

The first cross member 10 has the longitudinal member mounting holes 11. The longitudinal member mounting hole 11 is configured for fitting of the subframe longitudinal member 30, and the subframe longitudinal member 30 extends through the corresponding longitudinal member mounting hole 11. The subframe longitudinal member 30 may be connected to the first cross member 10 by welding. In an exemplary embodiment of the present disclosure, the subframe longitudinal member 30 first extends through the corresponding longitudinal member mounting hole 11, welding may be performed on a front joint surface and a rear joint surface of the subframe longitudinal member 30 and the first cross member 10, and the subframe longitudinal member 30 is fixedly connected to the first cross member 10 by welding. Nested connection between the subframe longitudinal member 30 and the first cross member 10 can constrain freedom degree of two surfaces of the first cross member 10, enhance the longitudinal rigidity of the first cross member 10 in the first direction, reduce a risk of sway of the first cross member 10 when subjected to a load in the first direction, and improve the overall structural stability of the subframe 100. By providing the longitudinal member mounting hole 11 at the first cross member 10, an effect of the subframe longitudinal member 30 penetrating the first cross member 10 is achieved, which facilitates the assembly of the first cross member 10 and the subframe longitudinal member 30 and improves production efficiency of the subframe 100.

In some embodiments of the present disclosure, as illustrated in FIG. 2, a cross-sectional shape of the subframe longitudinal member 30 matches a shape of the longitudinal member mounting hole 11.

A cross-section of the subframe longitudinal member 30 may be constructed as a rectangle, a circular shape, etc., and the longitudinal member mounting hole 11 is constructed as a rectangle, a circular shape, etc. corresponding to the cross-section of the subframe longitudinal member 30. The present disclosure takes a scenario where the cross-section of the subframe longitudinal member 30 is constructed as the circular shape as an example for illustration. The cross-section of the subframe longitudinal member 30 may be constructed as a circular cross-sectional structure with a diameter of 60 mm, and the longitudinal member mounting hole 11 is constructed as the circular shape corresponding to the cross-section of the subframe longitudinal member 30. Such an arrangement enables the cross-sectional shape of the subframe longitudinal member 30 to match the shape of the longitudinal member mounting hole 11, which can improve assembly tightness between the subframe longitudinal member 30 and the first cross member 10 when the subframe longitudinal member 30 extends through the corresponding longitudinal member mounting hole 11. When the subframe longitudinal member 30 is welded to the first cross member 10, quality of welding is improved, a risk of fracture and detachment of the subframe longitudinal member 30 at the longitudinal member mounting hole 11 is reduced, and reliability of the nested connection between the subframe longitudinal member 30 and the first cross member 10 is improved, thus further improving the overall structural stability of the subframe 100.

In some embodiments of the present disclosure, as illustrated in FIG. 1 and FIG. 2, in the first direction, at least one of the plurality of subframe longitudinal members 30 extends beyond a front side of the first cross member 10.

In the first direction, that is, in the X direction in FIG. 1, at least one of the plurality of subframe longitudinal members 30 extends beyond the front side of the first cross member 10. Taking two subframe longitudinal members 30 as an example for illustration, either a left subframe longitudinal member 30 or a right subframe longitudinal member 30 extends beyond the front side of the first cross member 10; or the left subframe longitudinal member 30 and the right subframe longitudinal member 30 both extend beyond the front side of the first cross member 10. The present disclosure takes a scenario where the left subframe longitudinal member 30 and the right subframe longitudinal member 30 both extend beyond the front side of the first cross member 10 as an example for illustration. When the subframe longitudinal member 30 is assembled and connected to the first cross member 10 by welding, the subframe longitudinal member 30 extends beyond the front side of the first cross member 10 to facilitate stable clamping, which improves stability of the welding and facilitates to improve the quality of the welding, further reducing the risk of the fracture and the detachment of the subframe longitudinal member 30 at the longitudinal member mounting hole 11, and further improving the reliability of the nested connection between the subframe longitudinal member 30 and the first cross member 10.

In some embodiments of the present disclosure, as illustrated in FIG. 1 and FIG. 2, a length dimension by which the subframe longitudinal member 30 extends beyond the front side of the first cross member 10 is L6, satisfying: 8 mm≤L6≤12 mm.

The length dimension by which the subframe longitudinal member 30 extends beyond the front side of the first cross member 10 is L6. The length dimension L6 by which the subframe longitudinal member 30 extends beyond the front side of the first cross member 10 satisfies: 8 mm≤L6≤12 mm. The length dimension L6 by which the subframe longitudinal member 30 extends beyond the front side of the first cross member 10 may be 8 mm, 10 mm, or 12 mm, etc. The present disclosure takes a scenario where L6 is 10 mm as an example for illustration. The length dimension L6 by which the subframe longitudinal member 30 extends beyond the front side of the first cross member 10 is 10 mm, which facilitates chamfering of an extended end. On the one hand, an extension length of 10 mm allows for more stable clamping, improves the stability of the welding, reduces a risk of unstable clamping caused by an excessively short extension length, helps improve the quality of the welding, thus reducing the risk of the fracture and the detachment of the subframe longitudinal member 30 at the longitudinal member mounting hole 11, and further improving the reliability of the nested connection between the subframe longitudinal member 30 and the first cross member 10. On the other hand, a risk of interference with other vehicle body assembly caused by an excessively long extension length is reduced, improving assembly efficiency.

In some embodiments of the present disclosure, as illustrated in FIG. 3, a cross-section of the first cross member 10 is of a rectangle. Two long sides of the rectangle are opposite to and spaced apart from each other in the first direction. Two short sides of the rectangle are opposite to and spaced apart from each other in the third direction of the subframe 100.

A cross-section of the second cross member 20 is of a rectangle. The two long sides of the rectangle are opposite to and spaced apart from each other in the X direction of the subframe 100. The two short sides of the rectangle are spaced apart from each other in the Z direction of the subframe 100, and are opposite to each other in the height direction of the subframe 100. In this way, the second cross member 20 can be better adapted to the subframe longitudinal member 30, reducing the risk of the fracture at a connection end caused by an excessively large or excessively small cross-sectional dimension of the first cross member 10, improving connection reliability between the longitudinal member mounting hole 11 and the corresponding subframe longitudinal member 30, and further enhancing operation safety of the vehicle.

In an exemplary embodiment of the present disclosure, a long side dimension of the rectangle may be L7, and a short side dimension of the rectangle may be L8. The long side dimension L7 of the rectangle satisfies: 70 mm≤L7≤85 mm. The short side dimension L8 of the rectangle satisfies: 50 mm≤L8<65 mm. The short side dimension L8 of the rectangle extends in the X direction. The long side dimension L7 of the rectangle may be set to 70 mm, 75 mm, or 85 mm, etc., and the short side dimension L8 of the rectangle may be set to 50 mm, 55 mm, or 65 mm, etc. The present disclosure takes a scenario where the long side dimension L7 of the rectangle is set to 80 mm and the short side dimension L8 of the rectangle is set to 60 mm as an example for illustration. Setting the long side dimension L7 of the rectangle to 80 mm and the short side dimension L8 of the rectangle to 60 mm enables better matching with the subframe longitudinal member 30, reduces the risk of the fracture at the connection end caused by the excessively large or excessively small cross-sectional dimension of the first cross member 10, improves the connection reliability between the longitudinal member mounting hole 11 and the corresponding subframe longitudinal member 30, thus improving the operation safety of the vehicle.

In some embodiments of the present disclosure, as illustrated in FIG. 1 and FIG. 2, the first cross member 10 has a cross member front side wall 12 and a cross member rear side wall 13 that are opposite to and spaced apart from each other in the first direction. The subframe longitudinal member 30 penetrating the first cross member 10 penetrates both the cross member front side wall 12 and the cross member rear side wall 13, and is fixedly connected to both the cross member front side wall 12 and the cross member rear side wall 13.

The first cross member 10 has the cross member front side wall 12 and the cross member rear side wall 13 that are opposite to each other in the first direction, and are spaced apart from each other. The subframe longitudinal member 30 penetrating the first cross member 10 penetrates both the cross member front side wall 12 and the cross member rear side wall 13, and is fixedly connected to both the cross member front side wall 12 and the cross member rear side wall 13. Such an arrangement further improves the connection stability between the subframe longitudinal member 30 and the first cross member 10, and further reduces the risk of the fracture and the detachment of the subframe longitudinal member 30 at the longitudinal member mounting hole 11. Also, freedom degree of the first cross member 10 is reliably constrained. When the first cross member 10 is subjected to an impact, swinging of the subframe 100 in the first direction is further reduced.

According to some embodiments of the present disclosure, as illustrated in FIG. 1, in the second direction, the two outermost support frames 70 are respectively located at inner sides of the corresponding subframe longitudinal members 30. The outermost subframe longitudinal member 30 is connected to a control arm rear mounting frame 33 at an outer side of the outermost subframe longitudinal member 30, and connected to a stabilizer bar mounting support 80 at an upper end of the outermost subframe longitudinal member 30. The stabilizer bar mounting support 80 is connected to the corresponding control arm rear mounting frame 33 and the corresponding support frame 70.

In the second direction, the two outermost support frames 70 are respectively located at the inner sides of the corresponding subframe longitudinal members 30. For example, an inner side wall of the outermost subframe longitudinal member 30 may be welded to the support frame 70, or an inner side wall of the outermost subframe longitudinal member 30 may be bolted to the support frame 70, but the present disclosure is not limited thereto. The inner side wall of the outermost subframe longitudinal member 30 may be connected to the support frame 70 in other manners, as long as the inner side wall of the outermost subframe longitudinal member 30 is connected to the support frame 70.

The outermost subframe longitudinal member 30 is connected to the control arm rear mounting frame 33 at the outer side of the outermost subframe longitudinal member 30. For example, an outer side wall of the outermost subframe longitudinal member 30 may be welded to the control arm rear mounting frame 33, or an outer side wall of the outermost subframe longitudinal member 30 may be bolted to the control arm rear mounting frame 33, but the present disclosure is not limited thereto. The outer side wall of the outermost subframe longitudinal member 30 may be connected to the control arm rear mounting frame 33 in other manners, as long as the outer side wall of the outermost subframe longitudinal member 30 is connected to the control arm rear mounting frame 33. Such an arrangement enables a fatigue load of the control arm rear mounting frame 33 to be dispersed to the subframe 100, thus improving fatigue strength of the control arm rear mounting frame 33, and further improving the fatigue strength of the subframe 100.

The upper end of the outermost subframe longitudinal member 30 is connected to the stabilizer bar mounting support 80. For example, the outermost subframe longitudinal member 30 may be welded to the stabilizer bar mounting support 80, or the outermost subframe longitudinal member 30 may be bolted to the stabilizer bar mounting support 80, but the present disclosure is not limited thereto. The outermost subframe longitudinal member 30 may be connected to the stabilizer bar mounting support 80 in other manners, as long as the stabilizer bar mounting support 80 is fixedly disposed at the outermost subframe longitudinal member 30.

The stabilizer bar mounting support 80 is connected to the corresponding control arm rear mounting frame 33 and the corresponding support frame 70. For example, the stabilizer bar mounting support 80 may be welded to the corresponding control arm rear mounting frame 33 and the corresponding support frame 70, or the stabilizer bar mounting support 80 may be bolted to the corresponding control arm rear mounting frame 33 and the corresponding support frame 70, but the present disclosure is not limited thereto. The stabilizer bar mounting support 80 may be connected to the corresponding control arm rear mounting frame 33 and the corresponding support frame 70 in other manners, as long as the stabilizer bar mounting support 80 is connected to the corresponding control arm rear mounting frame 33 and the corresponding support frame 70.

Thus, by connecting the stabilizer bar mounting support 80 to the corresponding control arm rear mounting frame 33 and the corresponding support frame 70 and also connecting the stabilizer bar mounting support 80 to the corresponding subframe longitudinal member 30, connection strength among the stabilizer bar mounting support 80, the corresponding control arm rear mounting frame 33, the corresponding support frame 70, and the corresponding subframe longitudinal member 30 is enhanced, which guides a load on the stabilizer bar mounting support 80 to be dispersed to the subframe 100, preventing a phenomenon of stress concentration on the stabilizer bar mounting support 80, and improving the fatigue strength and the rigidity of the subframe 100. Also, the transmission of the road noise through the stabilizer bar mounting support 80 to the passenger compartment can also be reduced, further improving the riding comfort of the vehicle.

According to some embodiments of the present disclosure, as illustrated in FIG. 1, the stabilizer bar mounting support 80 is lapped on an upper end of the corresponding control arm rear mounting frame 33 and also lapped on an upper end of the corresponding support frame 70.

The stabilizer bar mounting support 80 may overlap the upper end of the corresponding control arm rear mounting frame 33 and may also overlap the upper end of the corresponding support frame 70. Such an arrangement can further improve connection tightness among the stabilizer bar mounting support 80, the corresponding control arm rear mounting frame 33, and the corresponding support frame 70, thus further enhancing the connection strength among the stabilizer bar mounting support 80, the corresponding control arm rear mounting frame 33, and the corresponding support frame 70. The load on the stabilizer bar mounting support 80 is guided to be dispersed to the subframe 100, preventing the phenomenon of the stress concentration on the stabilizer bar mounting support 80, the control arm rear mounting frame 33, and the support frame 70, and further improving the fatigue strength and the rigidity of the subframe 100.

According to some embodiments of the present disclosure, as illustrated in FIG. 1, the stabilizer bar mounting support 80 may include a stabilizer bar mounting end wall 81 and a connection side wall 82. The connection side wall 82 is disposed around a circumferential edge of the stabilizer bar mounting end wall 81 to define a groove structure. The connection side wall 82 is connected between the corresponding subframe longitudinal member 30 and the stabilizer bar mounting end wall 81, and is also connected to the corresponding control arm rear mounting frame 33 and the corresponding support frame 70. The stabilizer bar mounting end wall 81 is configured for mounting of a stabilizer bar.

The stabilizer bar mounting support 80 may include the stabilizer bar mounting end wall 81 and the connection side wall 82. The stabilizer bar mounting end wall 81 is configured for the mounting the stabilizer bar. The connection side wall 82 is disposed around the circumferential edge of the stabilizer bar mounting end wall 81 to define the groove structure. The connection side wall 82 is connected between the corresponding subframe longitudinal member 30 and the stabilizer bar mounting end wall 81, and is also connected to the corresponding control arm rear mounting frame 33 and the corresponding support frame 70. Such an arrangement enables the stabilizer bar mounting support 80 to be connected to the corresponding subframe longitudinal member 30, the corresponding control arm rear mounting frame 33, and the corresponding support frame 70, allowing the stabilizer bar mounting support 80 to be firmly mounted at the subframe 100. The connection side wall 82 can reliably support the stabilizer bar mounting end wall 81 and improve rigidity of the stabilizer bar mounting end wall 81, such that the stabilizer bar can be firmly mounted at the stabilizer bar mounting support 80.

According to some embodiments of the present disclosure, as illustrated in FIG. 1, the control arm rear mounting frame 33 may include a first mounting plate 331 and a second mounting plate 332 connected to the first mounting plate 331. The first mounting plate 331 is located above the second mounting plate 332, and an assembling space configured for mounting of a control arm is defined between the first mounting plate 331 and the second mounting plate 331.

The control arm rear mounting frame 33 may include the first mounting plate 331 and the second mounting plate 332 connected to the first mounting plate 331. For example, the first mounting plate 331 may be integrally formed with the second mounting plate 332, or the first mounting plate 331 may be welded to the second mounting plate 332, but the present disclosure is not limited thereto. The first mounting plate 331 may be connected to the second mounting plate 332 in other manners, as long as the first mounting plate 331 is connected to the second mounting plate 332. The first mounting plate 331 may be located above the second mounting plate 332, and the assembling space configured for the mounting of the control arm is defined between the first mounting plate 331 and the second mounting plate 331, in such a manner that mounting the control arm in the assembling space defined between the first mounting plate 331 and the second mounting plate 332 is facilitated, improving assembly of the control arm with the control arm rear mounting frame 33.

Further, each of the first mounting plate 331 and the second mounting plate 332 may have a fitting hole. After the control arm is mounted in the assembling space, a bolt extends through the fitting hole and the control arm, thereby assembling the control arm to the control arm rear mounting frame 33.

According to some embodiments of the present disclosure, as illustrated in FIG. 1, the stabilizer bar mounting support 80 may be connected to the first mounting plate 331 of the corresponding control arm rear mounting frame 33.

The stabilizer bar mounting support 80 may be connected to the first mounting plate 331 of the corresponding control arm rear mounting frame 33. For example, the stabilizer bar mounting support 80 may be welded to the first mounting plate 331 of the corresponding control arm rear mounting frame 33, or the stabilizer bar mounting support 80 may also be bolted to the first mounting plate 331 of the corresponding control arm rear mounting frame 33, but the present disclosure is not limited thereto. The stabilizer bar mounting support 80 may be connected to the first mounting plate 331 of the corresponding control arm rear mounting frame 33 in other manners, as long as the stabilizer bar mounting support 80 is connected to the first mounting plate 331 of the corresponding control arm rear mounting frame 33. Thus, the stabilizer bar mounting support 80 is connected to the first mounting plate 331 of the corresponding control arm rear mounting frame 33, which facilitates the assembly of the stabilizer bar mounting support 80 with the first mounting plate 331, thus facilitating the assembly of the stabilizer bar mounting support 80 with the control arm rear mounting frame 33, reducing assembly difficulty of the subframe 100, and improving the production efficiency of the subframe 100.

According to some embodiments of the present disclosure, as illustrated in FIG. 1 and FIG. 2, the outermost subframe longitudinal member 30 is further connected to a reinforcing support 34 at an outer side of the outermost subframe longitudinal member 30. The reinforcing support 34 is adapted to be connected to the vehicle body longitudinal member 41 of the vehicle. In the first direction, the reinforcing support 34 is located at a rear side of the corresponding control arm rear mounting frame 33, and is connected to the corresponding control arm rear mounting frame 33.

The outermost subframe longitudinal member 30 may further be connected to the reinforcing support 34 at the outer side of the outermost subframe longitudinal member 30. For example, the outer side of the outermost subframe longitudinal member 30 may be welded to the reinforcing support 34, or the outer side of the outermost subframe longitudinal member 30 may also be bolted to the reinforcing support 34, but the present disclosure is not limited thereto. The outer side of the outermost subframe longitudinal member 30 may be connected to the reinforcing support 34 in other manners, as long as the outer side of the outermost subframe longitudinal member 30 is connected to the reinforcing support 34. The reinforcing support 34 is adapted to be connected to the vehicle body longitudinal member 41 of the vehicle. For example, the vehicle body longitudinal member 41 may be welded to the reinforcing support 34, or the vehicle body longitudinal member 41 may be bolted to the reinforcing support 34, but the present disclosure is not limited thereto. The vehicle body longitudinal member 41 may be connected to the reinforcing support 34 in other manners, as long as the vehicle body longitudinal member 41 is connected to the reinforcing support 34.

When the vehicle is involved in the collision, the energy-absorption structure 42 of a vehicle body 40 and the collapsible energy-absorption section 31 of the subframe longitudinal member 30 can crush to absorb the impact energy, while part of the impact force may also be transmitted to the vehicle body 40 and the passenger compartment through the subframe longitudinal member 30 and the vehicle body longitudinal member 41. The reinforcing support 34 is connected to the outermost subframe longitudinal member 30 at the outer side of the outermost subframe longitudinal member 30, and the vehicle body longitudinal member 41 is connected to the reinforcing support 34, which enables the reinforcing support 34 to disperse the impact force, thus avoiding deformation of the vehicle body 40 and the passenger compartment due to an excessively large single-point load, protecting safety of the occupants, and further enhancing the safety performance of the vehicle.

In the first direction, the reinforcing support 34 may be located at the rear side of the corresponding control arm rear mounting frame 33, and is connected to the corresponding control arm rear mounting frame 33. For example, the corresponding control arm rear mounting frame 33 may be integrally formed with the reinforcing support 34 as one piece, or the corresponding control arm rear mounting frame 33 may be welded to the reinforcing support 34, but the present disclosure is not limited thereto. The corresponding control arm rear mounting frame 33 may also be connected to the reinforcing support 34 in other manners, as long as the corresponding control arm rear mounting frame 33 is connected to the reinforcing support 34. The present disclosure takes a scenario where the corresponding control arm rear mounting frame 33 is integrally formed with the reinforcing support 34 as an example for illustration. Thus, the reinforcing support 34 is integrally formed with the corresponding control arm rear mounting frame 33, which can improve the rigidity of the control arm rear mounting frame 33, thus effectively suppressing the transmission of the noise from the control arm rear mounting frame 33.

According to some embodiments of the present disclosure, as illustrated in FIG. 1, an angle may be formed between the reinforcing support 34 and the corresponding subframe longitudinal member 30.

The angle may be formed between the reinforcing support 34 and the corresponding subframe longitudinal member 30, such that a Y-shaped structure may be formed between the reinforcing support 34 and the corresponding subframe longitudinal member 30. When the vehicle is involved in the collision, the reinforcing support 34 can allow the impact force to be divided and transmitted along two paths to the vehicle body 40, thereby dispersing the impact force. Furthermore, the deformation of the vehicle body 40 and the passenger compartment due to the excessively large single-point load is avoided, protecting the safety of the occupants, and further enhancing the safety performance of the vehicle.

According to some embodiments of the present disclosure, as illustrated in FIG. 1, the reinforcing support 34 may have a third cavity structure in the reinforcing support 34, in such a manner that structural strength and rigidity of the reinforcing support 34 can be improved, and a weight of the reinforcing support 34 can be reduced on the premise of satisfying the strength requirements for the reinforcing support 34, thus reducing manufacturing costs of the reinforcing support 34, and further reducing the manufacturing costs of the subframe 100.

According to some embodiments of the present disclosure, as illustrated in FIG. 1, the reinforcing support 34 may include a first reinforcing support plate 341 and a second reinforcing support plate 342 connected to the first reinforcing support plate 341. The first reinforcing support plate 341 is located above the second reinforcing support plate 341. The first reinforcing support plate 341 and the second reinforcing support plate 341 jointly define the third cavity structure.

The reinforcing support 34 may include the first reinforcing support plate 341 and the second reinforcing support plate 342 connected to the first reinforcing support plate 341. For example, the first reinforcing support plate 341 may be integrally formed with the second reinforcing support plate 342, or the first reinforcing support plate 341 may be welded the second reinforcing support plate 342, but the present disclosure is not limited thereto. The first reinforcing support plate 341 may be connected to the second reinforcing support plate 342 in other manners, as long as the first reinforcing support plate 341 is connected to the second reinforcing support plate 34. The first reinforcing support plate 341 may be located above the second reinforcing support plate 342. The first reinforcing support plate 341 and the second reinforcing support plate 342 jointly define the third cavity structure. In this way, a mass of the reinforcing support 34 can be reduced on the premise of satisfying the strength requirements for the reinforcing support 34, thus reducing the manufacturing costs of the reinforcing support 34, and further reducing the manufacturing costs of the subframe 100.

According to some embodiments of the present disclosure, as illustrated in FIG. 1, the second reinforcing support plate 342 may be integrally formed with the corresponding control arm rear mounting frame 33, which can further improve the rigidity of the control arm rear mounting frame 33, thus effectively suppressing the transmission of the noise from the control arm rear mounting frame 33.

According to some embodiments of the present disclosure, as illustrated in FIG. 1, the second reinforcing support plate 342 may have a flange structure formed at an edge of the second reinforcing support plate 342. The flange structure may be bent towards a lower side of the subframe 100. Such an arrangement can improve rigidity and strength of the second reinforcing support plate 342, ensuring that the second reinforcing support plate 342 has favorable rigidity and strength.

According to some embodiments of the present disclosure, as illustrated in FIG. 1 and FIG. 2, the subframe 100 may further include a first mounting sleeve 343. Each of the first reinforcing support plate 341 and the second reinforcing support plate 342 has a vehicle body mounting hole 344 in communication with the third cavity structure. The first mounting sleeve 343 is located in the third cavity structure and supported between the first reinforcing support plate 341 and the second reinforcing support plate 342. In addition, the first mounting sleeve 343 is arranged to correspond to the vehicle body mounting hole 344.

The subframe 100 may further include the first mounting sleeve 343. Each of the first reinforcing support plate 341 and the second reinforcing support plate 342 has the vehicle body mounting hole 344 in communication with the third cavity structure. The first mounting sleeve 343 is located in the third cavity structure and supported between the first reinforcing support plate 341 and the second reinforcing support plate 342, in such a manner that the rigidity of the reinforcing support 34 is improved. In addition, the first mounting sleeve 343 is arranged to correspond to the vehicle body mounting hole 344. In this way, not only can the first mounting sleeve 343 be mounted inside the reinforcing support 34 to save a space, but also a bolt is enabled to extend through the first mounting sleeve 343 and connected to the vehicle body longitudinal member 41, thus fixedly connecting the reinforcing support 34 to the corresponding vehicle body longitudinal member 41.

According to some embodiments of the present disclosure, as illustrated in FIG. 1 and FIG. 2, in the first direction, a second mounting sleeve 35 is fixedly disposed at a rear end of each of the plurality of subframe longitudinal members 30. The second mounting sleeve 35 may penetrate the subframe longitudinal member 30 in the third direction. The second mounting sleeve 35 penetrates the corresponding subframe longitudinal member 30 and is configured to be connected to the vehicle body longitudinal member 41 of the vehicle. In an exemplary embodiment of the present disclosure, a bolt may pass through the second mounting sleeve 35, to enable the subframe longitudinal member 30 to be connected to the corresponding vehicle body longitudinal member 41, thus fitting the subframe 100 to the vehicle body longitudinal member 41.

According to some embodiments of the present disclosure, as illustrated in FIG. 6, the subframe 100 may include an anti-collision assembly 300 disposed at the first cross member 10 and located at the front side of the first cross member 10. When the vehicle is involved in the collision, the obstacle first impacts the anti-collision assembly 300. After a certain degree of buffering, the impact force is then transmitted to the subframe 100, which can reduce the impact force exerted on the subframe 100, thus protecting the subframe 100, and further enhancing the safety performance of the vehicle.

According to some embodiments of the present disclosure, as illustrated in FIG. 6, the anti-collision assembly 300 may include: an anti-collision cross member 1; a plurality of energy-absorption members 2 fixedly connected to the anti-collision cross member 1, located at a rear side of the anti-collision cross member 1, and arranged in the second direction. Each of the plurality of energy-absorption members 2 is fixedly connected to the first cross member 10.

The anti-collision assembly 300 includes the anti-collision cross member 1 and the plurality of energy-absorption members 2. The anti-collision cross member 1 is disposed at a front end of the energy-absorption member 2. The number of the energy-absorption member 2 may be two, three or more. The present disclosure takes a scenario where two energy-absorption members 2 are provided as an example for illustration. Each of the two energy-absorption members 2 is fixedly connected to the anti-collision cross member 1, and may be fixedly connected to the anti-collision cross member 1 by welding. The two energy-absorption members 2 are located at the rear side of the anti-collision cross member 1 and arranged in a length direction of the anti-collision cross member 1. The two energy-absorption members 2 are respectively disposed adjacent to two ends of the anti-collision cross member 1. The two energy-absorption members 2 are respectively disposed adjacent to the two ends of the anti-collision cross member 1, thus the impact force can be absorbed uniformly. Each of the two energy-absorption members 2 is adapted to be connected to a front end of the subframe 100.

When the vehicle is involved in the collision, the impact force is transmitted to the energy-absorption member 2 through the anti-collision cross member 1. The energy-absorption member 2 absorbs the impact force to a certain extent, reducing a risk of damage to the subframe 100 caused by direct force transmission to the subframe 100, thus improving the operation stability and the safety of the vehicle. The two energy-absorption members 2 are detachably connected to the subframe 100. The energy-absorption member 2 may be connected to the subframe 100 by means of bolting or riveting. The present disclosure takes a scenario where the energy-absorption member 2 is bolted to the subframe 100 as an example for illustration. The anti-collision assembly 300 is adapted to a vehicle with a relatively large weight and a relatively large dimension within a platform. When the subframe 100 is mounted to a vehicle with a relatively small weight and a relatively small dimension under a same platform, safety design standards can be satisfied without fitting of the anti-collision assembly 300. Therefore, the anti-collision assembly 300 can be detached from the subframe 100. In this way, assembly and disassembly of the anti-collision assembly 300 can meet application requirements of different vehicle models, thus enhancing versatility of the subframe 100 and reducing the production costs of the subframe 100.

According to some embodiments of the present disclosure, as illustrated in FIG. 6, a cross-sectional area of the energy-absorption member 2 increases gradually in a direction from the anti-collision cross member 1 to the first cross member 10. The energy-absorption member 2 may consist of two U-shaped sheets, which are arranged opposite to and connected to each other by welding to form the energy-absorption member 2. The cross-sectional area of the energy-absorption member 2 increases gradually in a direction from the anti-collision cross member 1 to the first cross member 10, which allows the energy-absorption member 2 to be substantially formed as a tapered structure, further improving structural stability of the energy-absorption member 2, improving an energy absorption effect of the energy-absorption member 2, and enabling the energy-absorption member 2 to be reliably supported between the subframe 100 and the anti-collision cross member 1. When the anti-collision cross member 1 is impacted, the energy-absorption member 2 can absorb more energy, thus reducing the transmission of impact force to the subframe 100.

In some embodiments of the present disclosure, as illustrated in FIG. 6, the energy-absorption member 2 has a collapsible recess 203.

The energy-absorption member 2 has the collapsible recess 203. The collapsible recess 203 is crushable to absorb the energy. When the vehicle is involved in the collision, the impact force is transmitted to the energy-absorption member 2 through the anti-collision cross member 1. The energy-absorption member 2 crushes under the force to absorb the impact force, which reduces the risk of the damage to the subframe 100 caused by the direct transmission of the impact force to the subframe 100, thus improving the operation stability and the safety of the vehicle.

In some embodiments of the present disclosure, as illustrated in FIG. 6, in the length direction of the anti-collision cross member 1, the energy-absorption member 2 has the collapsible recess 203 at a side wall of the energy-absorption member 2.

In the length direction of the anti-collision cross member 1, that is, in the Y direction in FIG. 1, each energy-absorption member 2 has two side walls. Each energy-absorption member 2 has a left side wall and a right side wall. With respect to the two energy-absorption members 2, each of the left side wall and the right side wall has the collapsible recess 203. When the vehicle is involved in the collision, the impact force is transmitted to the energy-absorption member 2 through the anti-collision cross member 1. The collapsible recesses 203 at the left side wall and the right side wall of the energy-absorption member 2 crush under the force to absorb the impact force, thus reducing the risk of the damage to the subframe 100 caused by the direct transmission of the impact force to the subframe 100, and further improving the operation stability and the safety of the vehicle.

In some embodiments of the present disclosure, as illustrated in FIG. 6, the energy-absorption member 2 has a plurality of collapsible recesses 203 sequentially arranged in a length direction of the energy-absorption member 2.

Each energy-absorption member 2 has the plurality of collapsible recesses 203. The plurality of collapsible recesses 203 are respectively disposed at the left side wall and the right side wall of each energy-absorption member 2. Each of the left side wall and the right side wall of the energy-absorption member 2 has the plurality of collapsible recesses 203. The plurality of collapsible recesses 203 are sequentially arranged at each side wall in the length direction of the energy-absorption member 2. The length direction of the energy-absorption member 2 refers to the X direction in FIG. 1. By providing the plurality of collapsible recesses 203, when the vehicle is involved in the collision, the impact force is transmitted to the energy-absorption member 2 through the anti-collision cross member 1. The plurality of collapsible recesses 203 at the energy-absorption member 2 simultaneously collapsible under the force to absorb the impact force, thus further reducing the risk of the damage to the subframe 100 caused by the direct transmission of the impact force to the subframe 100, and further improving the operation stability and the safety of the vehicle.

In some embodiments of the present disclosure, as illustrated in FIG. 6, the energy-absorption member 2 has an unloading hole.

The energy-absorption member 2 has the unloading hole. The unloading hole can absorb the impact force to a certain extent. A design of the unloading hole protects the energy-absorption member 2 from being easily damaged, enabling the energy-absorption member 2 to absorb the energy normally, reducing a risk of collapsing of the energy-absorption member 2 caused by a small impact force, further facilitating normal energy absorption of the anti-collision assembly 300, enabling the anti-collision assembly 300 to effectively protect the subframe 100, and also prolonging a service life of the anti-collision assembly 300.

In some embodiments of the present disclosure, as illustrated in FIG. 6, each energy-absorption member 2 is fixedly provided with a mounting base 3 at an end of each energy-absorption member 2 away from the anti-collision cross member 1. The mounting base 3 is adapted to be connected to the subframe 100.

Each energy-absorption member 2 is fixedly provided with the mounting base 3 at the end of each energy-absorption member 2 away from the anti-collision cross member 1. That is, the energy-absorption member 2 is fixedly provided with the mounting base 3 at a second end 202 of the energy-absorption member 2, and the mounting base 3 may be fixedly connected to the second end 202 of the energy-absorption member 2 by welding, in such a manner that connection reliability between the mounting base 3 and the energy-absorption member 2 is improved, and a risk of fracture between the mounting base 3 and the energy-absorption member 2 is reduced, thus improving the stability of the anti-collision assembly 300.The mounting base 3 is adapted to be connected to the subframe 100, and the anti-collision assembly 300 is connected to the subframe 100 through the mounting base 3. The mounting base 3 may be connected to the subframe 100 by means of bolting or riveting. The present disclosure takes a scenario where the mounting base 3 is bolted to the subframe 100 as an example for description. The mounting base 3 is detachably assembled to the subframe 100 by means of bolting, thus realizing detachable assembly between the anti-collision assembly 300 and the subframe 100. The anti-collision assembly 300 adapts to the vehicle with the relatively large weight and the relatively large dimension within the platform. When the subframe 100 is mounted to the vehicle with the relatively small weight and the relatively small dimension under the same platform, the safety design standards can be satisfied without assembling the anti-collision assembly 300. Therefore, the anti-collision assembly 300 can be detached from the subframe 100, such that the assembly and disassembly of the anti-collision assembly 300 can adapt to the safety design standards of different vehicle classes, enabling the subframe 100 to adapt to the application requirements of different vehicle models, improving the versatility of the subframe 100, and reducing the production costs of the subframe 100.

In some embodiments of the present disclosure, as illustrated in FIG. 6, the mounting base 3 is adapted to be detachably connected to the subframe 100.

The mounting base 3 may be detachably connected to the subframe 100, such that the anti-collision assembly 300 may be detachably connected to the subframe 100 through the mounting base 3. The mounting base 3 may be connected to the subframe 100 by means of bolting or riveting. The present disclosure takes a scenario where the mounting base 3 is bolted to the subframe 100 as an example for illustration. The mounting base 3 is detachably assembled to the subframe 100 by means of bolting, thus realizing the detachable assembly between the anti-collision assembly 300 and the subframe 100. The anti-collision assembly 300 adapts to the vehicle with the relatively large weight and the relatively large dimension within the platform. When the subframe 100 is mounted to the vehicle with the relatively small weight and the relatively small dimension under the same platform, the safety design standards can be satisfied without assembling the anti-collision assembly 300. Therefore, the anti-collision assembly 300 can be detached from the subframe 100, such that the assembly and the disassembly of the anti-collision assembly 300 can adapt to the safety design standards of different vehicle classes, enabling the subframe 100 to adapt to the application requirements of different vehicle models, improving the versatility of the subframe 100, and reducing the production costs of the subframe 100.

In some embodiments of the present disclosure, as illustrated in FIG. 6, the anti-collision cross member 1 has an arc-shaped structure.

The anti-collision cross member 1 may be constructed as the arc-shaped structure, or the anti-collision cross member 1 may be constructed as an elliptical arc-shaped structure. In the length direction of the vehicle, the arc-shaped structure may be arranged to protrude towards a front end of the vehicle. By constructing the anti-collision cross member 1 as the arc-shaped structure, a contact area between the anti-collision cross member 1 and a colliding object may gradually increase during a frontal impact on the vehicle, which enables the anti-collision cross member 1 to absorb the impact force gradually, improving impact resistance of the anti-collision cross member 1, and thus facilitating to enhance the safety of the vehicle.

In some embodiments of the present disclosure, as illustrated in FIG. 6, a cross-section of the anti-collision cross member 1 is in a circular shape.

The cross-section of the anti-collision cross member 1 is in the circular shape. The circular anti-collision cross member 1 has favorable mechanical performance. By constructing the cross-section of the anti-collision cross member 1 as the circular shape, when the vehicle is involved in the collision, the circular anti-collision cross member 1 may be collapsible, and a part of the impact force is absorbed first, which allows the anti-collision assembly 300 to better exert an energy absorption function, better protecting the subframe 100, and improving the stability and the safety of the subframe 100.

In some embodiments of the present disclosure, as illustrated in FIG. 6, the energy-absorption member 2 defines a fourth cavity structure.

The energy-absorption member 2 consists of two U-shaped sheets, which are arranged opposite to and connected to each other by welding to form the energy-absorption member 2. The two U-shaped sheets are connected to each other by welding to define the fourth cavity structure. The energy-absorption member 2 defines the fourth cavity structure. When the vehicle is involved in the collision, the impact force is transmitted to the energy-absorption member 2 through the anti-collision cross member 1. The energy-absorption member 2 absorbs the impact force to a certain extent and crushes towards an interior of the fourth cavity structure to absorb the impact force, thus reducing the risk of the damage to the subframe 100 caused by the direct transmission of the impact force to the subframe 100 through the energy-absorption member 2, and improving the operation stability and the safety of the vehicle.

In some embodiments of the present disclosure, as illustrated in FIG. 6, after the anti-collision assembly 300 is mounted to the subframe 100, the anti-collision assembly 300 is located below a vehicle body energy-absorption box 400. The vehicle body energy-absorption box 400 is provided with the energy-absorption structure 42. In the front-rear direction of the vehicle, a rear end of the anti-collision assembly 300 is located behind the vehicle body energy-absorption box 400.

After the anti-collision assembly 300 is mounted to the subframe 100, the anti-collision assembly 300 is located below the vehicle body energy-absorption box 400. In the front-rear direction of the vehicle, the rear end of the anti-collision assembly 300 is located behind the vehicle body energy-absorption box 400. The anti-collision assembly 300 is a supplement to the vehicle body energy-absorption box 400, a collapsible structure of the vehicle body longitudinal member 41, and a longitudinal member groove collapsible structure of the subframe 100. The anti-collision assembly 300 can cooperate with the vehicle body energy-absorption box 400, the collapsible structure of the vehicle body longitudinal member 41, and the longitudinal member groove collapsible structure of the subframe 100 to improve an overall energy-absorption effect of the vehicle.

The vehicle body assembly according to the embodiments of the present disclosure includes the vehicle body 40 having the vehicle body longitudinal member 41. The vehicle body assembly also includes the subframe 100 in the above-described embodiments. The subframe 100 is fixedly disposed at the vehicle body longitudinal member 41 and located below the vehicle body longitudinal member 41. In this way, the fatigue strength and the rigidity of the subframe 100 can be improved, further enhancing the safety performance of the vehicle.

The vehicle according to the embodiments of the present disclosure includes the vehicle body assembly in above-described embodiments, which can improve the fatigue strength and the rigidity of the subframe 100, further enhancing the safety performance of the vehicle.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A subframe of a vehicle, comprising:
a first cross member and a second cross member that are spaced apart from each other in a first direction of the subframe, the first cross member being located at a front side of the second cross member;
a plurality of subframe longitudinal members arranged in a second direction of the subframe, each of the plurality of subframe longitudinal members being connected to the first cross member and the second cross member; and
a third cross member located between the first cross member and the second cross member in the first direction, the third cross member being connected to each of the plurality of subframe longitudinal members, the third cross member being constructed as an arch-shaped structure, and the third cross member protruding towards the second cross member in the first direction.

2. The subframe of the vehicle according to claim 1, wherein:
in a third direction of the subframe, a level of a lower surface of the second cross member is lower than a level of a lower surface of a battery pack of the vehicle, the first direction, the second direction, and the third direction being perpendicular to each other.

3. The subframe of the vehicle according to claim 2, wherein a difference between the level of the lower surface of the second cross member and the level of the lower surface of the battery pack is H, where 10 mm≤H≤15 mm.

4. The subframe of the vehicle according to claim 2 or 3, wherein the second cross member is fixedly connected to a lower surface of each of the plurality of subframe longitudinal members.

5. The subframe of the vehicle according to claim 4, wherein each of two ends of the second cross member is formed as a connection end having a fitting notch, the fitting notch being adapted to a corresponding subframe longitudinal member of the plurality of subframe longitudinal members, and the connection end being fixedly connected to a lower surface of the corresponding subframe longitudinal member.

6. The subframe of the vehicle according to claim 5, wherein a connection length between the connection end and the corresponding subframe longitudinal member is L3, where 25 mm≤L3≤35 mm.

7. The subframe of the vehicle according to any one of claims 2 to 6, wherein in the third direction, a level of an upper surface of the second cross member is flush with a level of a middle part of each of the plurality of subframe longitudinal members.

8. The subframe of the vehicle according to any one of claims 1 to 7, wherein:
a cross-section of the second cross member is of a rectangle;
a long side dimension of the rectangle is L4 and a short side dimension of the rectangle is L5, where: 50 mm≤L4≤60 mm, and 30 mm≤L5<50 mm.

9. The subframe of the vehicle according to any one of claims 1 to 8, wherein at least one of the plurality of subframe longitudinal members is provided with a collapsible energy-absorption section, wherein the collapsible energy-absorption section has a collapsible recess structure recessed inward towards the subframe longitudinal member and disposed on an upper surface of the collapsible energy-absorption section.

10. The subframe of the vehicle according to claim 9, wherein:
in the first direction, the collapsible recess structure has a first surface and a second surface adjoining the first surface, and
an angle is formed between the first surface and the second surface.

11. The subframe of the vehicle according to claim 10, the angle between the first surface and the second surface is α, where 125°≤α≤150°.

12. The subframe of the vehicle according to claim 9 or 10, wherein in the second direction, at least one side of the collapsible energy-absorption section protrudes beyond a corresponding subframe longitudinal member of the plurality of subframe longitudinal members.

13. The subframe of the vehicle according to any one of claims 9 to 11, wherein each of the plurality of subframe longitudinal members is provided with the collapsible energy-absorption section, the collapsible energy-absorption sections of the plurality of subframe longitudinal members being arranged correspondingly in the second direction.

14. The subframe of the vehicle according to claim 13, wherein in the first direction, the collapsible recess structure has a midpoint, wherein a line connecting midpoints of the collapsible energy-absorption sections of the plurality of subframe longitudinal members forms a first straight line, the first straight line being located at a middle part of a powertrain of the vehicle.

15. The subframe of the vehicle according to any one of claims 9 to 14, wherein in the first direction, a spacing distance between the collapsible energy-absorption section and the first cross member is less than a spacing distance between the collapsible-energy absorption section and the second cross member.

16. The subframe of the vehicle according to any one of claims 1 to 15, further comprising a first suspension mounting frame, a second suspension mounting frame, and a third suspension mounting frame, wherein:
each of the first suspension mounting frame and the second suspension mounting frame is fixedly disposed on the first cross member and arranged in the second direction; and
the third suspension mounting frame is disposed on the third cross member.

17. The subframe of the vehicle according to claim 16, wherein in the second direction, the third suspension mounting frame is located between the first suspension mounting frame and the second suspension mounting frame.

18. The subframe of the vehicle according to claim 16 or 17, wherein the third suspension mounting frame is disposed at a middle part of the third cross member.

19. The subframe of the vehicle according to any one of claims 16 to 18, wherein each of the first suspension mounting frame and the second suspension mounting frame comprises a connection base and a suspension mounting plate, wherein:
the connection base and the suspension mounting plate are arranged in the second direction;
the connection base and the suspension mounting plate face each other and are spaced apart from each other to define a suspension mounting space; and
the connection base is also adapted to be fixedly connected to a vehicle body longitudinal member of the vehicle.

20. The subframe of the vehicle according to claim 19, wherein the connection base is fixedly connected to both the first cross member and a corresponding subframe longitudinal member of the plurality of subframe longitudinal members.

21. The subframe of the vehicle according to claim 19 or 20, wherein:
the connection base defines a first cavity structure; and
in the second direction, an inner end wall of the connection base serves as a mounting end wall for mounting a suspension, the mounting end wall being perpendicular to the first cross member.

22. The subframe of the vehicle according to claim 21, wherein the mounting end wall has a suspension mounting hole, and the first cavity structure has a mounting ring in the first cavity structure, wherein:
the mounting ring is disposed on the mounting end wall and corresponds to the suspension mounting hole; and
the mounting ring has an internal thread on an inner circumferential wall of the mounting ring.

23. The subframe of the vehicle according to any one of claims 19 to 22, wherein in the second direction, the connection base is provided with a mounting portion at an outer end of the connection base, the mounting portion being adapted to be connected to the vehicle body longitudinal member.

24. The subframe of the vehicle according to any one of claims 19 to 23, wherein in the second direction, a cross-sectional area of the connection base decreases gradually in a direction from an inner side of the connection base to an outer side of the connection base.

25. The subframe of the vehicle according to any one of claims 19 to 24, wherein the connection base has an avoidance groove structure adapted to correspond to a fastener for connecting the suspension, the avoidance groove structure being configured to avoid a disassembly tool.

26. The subframe of the vehicle according to any one of claims 19 to 25, further comprising a plurality of connection supports, wherein each of the plurality of connection supports is connected between the first cross member and a corresponding subframe longitudinal member of the plurality of subframe longitudinal members, and is located at a connection corner where the first cross member is connected to the corresponding subframe longitudinal member.

27. The subframe of the vehicle according to claim 26, wherein at least one connection base is connected to the connection support connected to the corresponding subframe longitudinal member.

28. The subframe of the vehicle according to any one of claims 19 to 27, wherein in the second direction, the suspension mounting plate is located at an inner side of the corresponding connection base.

29. The subframe of the vehicle according to claim 16, wherein the third suspension mounting frame comprises a first mounting portion and a second mounting portion, wherein:
the first mounting portion is opposite to and spaced apart from the second mounting portion in the second direction;
each of the first mounting portion and the second mounting portion has a first mounting hole; and
the first mounting portion and/or the second mounting portion has a fixedly disposed fitting structure of an annular shape, wherein the fitting structure has an internal thread on an inner circumferential wall of the fitting structure and faces towards the corresponding first mounting hole.

30. The subframe of the vehicle according to claim 29, wherein the third suspension mounting frame further comprises a connection portion, wherein:
the connection portion is connected between the first mounting portion and the second mounting portion; and
the connection portion is disposed adjacent to a lower end of the first mounting portion and a lower end of the second mounting portion.

31. The subframe of the vehicle according to claim 29 or 30, wherein the first mounting portion has a bent portion at an upper end of the first mounting portion; and/or the second mounting portion has a bent portion at an upper end of the second mounting portion, wherein:
the bent portion is connected to the third cross member; and
in the second direction, the bent portion is bent towards an outside of the third cross member.

32. The subframe of the vehicle according to claim 20, wherein:
at least one of the plurality of subframe longitudinal members penetrates the first cross member; and
the connection base corresponding to the subframe longitudinal member that penetrates the first cross member is located above an overlapping region where the corresponding subframe longitudinal member overlaps the first cross member.

33. The subframe of the vehicle according to any one of claims 1 to 32, wherein:
in the second direction, each of two outermost subframe longitudinal members of the plurality of subframe longitudinal members is connected to a control arm front mounting frame at an outer wall of each of the two outermost subframe longitudinal members; and
two ends of the third cross member are arranged to correspond to the control arm front mounting frames of the corresponding subframe longitudinal members, respectively.

34. The subframe of the vehicle according to claim 33, wherein the two ends of the third cross member are arranged to correspond to rear ends of the corresponding control arm front mounting frames, respectively.

35. The subframe of the vehicle according to claim 33 or 34, wherein the third cross member comprises a first cross member body, a second cross member body, and a third cross member body, wherein:
the second cross member body is connected between the first cross member body and the third cross member body;
the second cross member body is constructed as an arc-shaped structure protruding towards the second cross member; and
the first cross member body and the third cross member body are respectively connected to the two outermost subframe longitudinal members.

36. The subframe of the vehicle according to claim 35, wherein:
a height dimension of the second cross member body in a third direction is H1; and
a width dimension of the second cross member body in the first direction is H2, where H2<H1.

37. The subframe of the vehicle according to claim 35 or 36, wherein the first cross member body and/or the third cross member body is a flat structure.

38. The subframe of the vehicle according to any one of claims 1 to 37, wherein in a third direction, an orthographic projection of the third cross member is located at a rear side of an orthographic projection of a powertrain of the vehicle.

39. The subframe of the vehicle according to any one of claims 1 to 38, further comprising a support frame located between the third cross member and the second cross member in the first direction, the support frame being connected between the third cross member and the second cross member.

40. The subframe of the vehicle according to claim 39, wherein:
a plurality of support frames are provided and arranged in the second direction; and
two outermost support frames of the plurality of support frames are respectively disposed adjacent to two ends of the third cross member and respectively connected to two outermost subframe longitudinal members of the plurality of subframe longitudinal members.

41. The subframe of the vehicle according to claim 39 or 40, wherein the support frame has a steering gear mounting hole.

42. The subframe of the vehicle according to any one of claims 39 to 41, wherein the support frame comprises a first support frame plate and a second support frame plate, wherein:
the first support frame plate and the second support frame plate are arranged in a third direction, and connected to each other; and
the first support frame plate and the second support frame plate jointly define a second cavity structure.

43. The subframe of the vehicle according to any one of claims 39 to 42, wherein:
a length dimension of the third cross member is L1; and
in a length direction of the third cross member, a connection length between the support frame and the third cross member is L2, where 0.1 L1≤ L2≤0.3 L1.

44. The subframe of the vehicle according to any one of claims 39 to 43, wherein:
a length dimension of the second cross member is L8; and
in a length direction of the second cross member, a connection length between the support frame and the second cross member is L9, where 0.2 L8≤L9≤0.25 L8.

45. The subframe of the vehicle according to any one of claims 39 to 44, wherein a connection length between the support frame and the third cross member is greater than a connection length between the support frame and the second cross member.

46. The subframe of the vehicle according to any one of claims 39 to 45, wherein the support frame is at least partially lapped on an upper surface of the second cross member.

47. The subframe of the vehicle according to any one of claims 1 to 46, wherein at least one of the plurality of subframe longitudinal members penetrates the first cross member.

48. The subframe of the vehicle according to claim 47, wherein the first cross member has longitudinal member mounting holes, each of the plurality of the subframe longitudinal members extending through a corresponding one of the corresponding longitudinal member mounting holes.

49. The subframe of the vehicle according to claim 48, wherein in the first direction, at least one of the plurality of subframe longitudinal members extends beyond a front side of the first cross member.

50. The subframe of the vehicle according to claim 49, wherein a length dimension by which the subframe longitudinal member extends beyond the front side of the first cross member is L6, where 8 mm≤L6≤12 mm.

51. The subframe of the vehicle according to any one of claims 47 to 50, wherein a cross-section of the first cross member is of a rectangle, wherein:
two long sides of the rectangle are opposite to and spaced apart from each other in the first direction; and
two short sides of the rectangle are opposite to and spaced apart from each other in a third direction of the subframe.

52. The subframe of the vehicle according to any one of claims 47 to 51, wherein:
the first cross member has a cross member front side wall and a cross member rear side wall that are opposite to and spaced apart from each other in the first direction; and
the subframe longitudinal member penetrating the first cross member penetrates both the cross member front side wall and the cross member rear side wall, and is fixedly connected to both the cross member front side wall and the cross member rear side wall.

53. The subframe of the vehicle according to claim 40, wherein:
in the second direction, the two outermost support frames are respectively located at inner sides of the corresponding subframe longitudinal members;
an outmost subframe longitudinal member of the plurality of subframe longitudinal members is connected to a control arm rear mounting frame at an outer side of the outmost subframe longitudinal member, and connected to a stabilizer bar mounting support at an upper end of the outmost subframe longitudinal member, the stabilizer bar mounting support being connected to the corresponding control arm rear mounting frame and the corresponding support frame.

54. The subframe of the vehicle according to claim 53, wherein the stabilizer bar mounting frame is lapped on an upper end of the corresponding control arm rear mounting frame and also lapped on an upper end of the corresponding support frame.

55. The subframe of the vehicle according to claim 53 or 54, wherein the outermost subframe longitudinal member is further connected to a reinforcing support at an outer side of the outermost subframe longitudinal member, wherein:
the reinforcing support is adapted to be connected to a vehicle body longitudinal member of the vehicle; and
in the first direction, the reinforcing support is located at a rear side of the corresponding control arm rear mounting frame, and is connected to the corresponding control arm rear mounting frame.

56. The subframe of the vehicle according to claim 55, wherein an angle is formed between the reinforcing support and the corresponding subframe longitudinal member.

57. The subframe of the vehicle according to any one of claims 1 to 56, further comprising an anti-collision assembly disposed on the first cross member and located at a front side of the first cross member.

58. The subframe of the vehicle according to claim 57, wherein the anti-collision assembly comprises:
an anti-collision cross member;
a plurality of energy-absorption members fixedly connected to the anti-collision cross member, the plurality of energy-absorption members being located at a rear side of the anti-collision cross member, and arranged in the second direction, and each of the plurality of energy-absorption members being fixedly connected to the first cross member.

59. The subframe of the vehicle according to claim 58, wherein in a direction from the anti-collision cross member to the first cross member, a cross-sectional area of the energy-absorption member increases gradually.

60. The subframe of the vehicle according to claim 58 or 59, wherein the energy-absorption member has a collapsible recess.

61. A vehicle body assembly, comprising:
a vehicle body having a vehicle body longitudinal member;
a subframe fixedly disposed at the vehicle body longitudinal member and located below the vehicle body longitudinal member, the subframe being the subframe of the vehicle according to any one of claims 1 to 60.

62. A vehicle, comprising the vehicle body assembly according to claim 61.
